# EUROPEAN PATENT SPECIFICATION

(11) **EP 2 851 536 B1**
(45) Date of publication and mention of the grant of the patent: **21.11.2018**
(21) Application number: 13791231.7
(22) Date of filing: 17.05.2013
(51) Int. Cl.: F02D 9/02, B60W 10/04, B60W 10/06, B60W 10/101, B60W 10/107, F02D 11/10, F02D 29/00, F02D 41/04, F02D 41/02, F02D 41/12, F02D 31/00, F16H 61/662, F02D 41/00

(54) **VEHICLE CONTROL DEVICE, VEHICLE CONTROL METHOD, AND SADDLE-RIDE-TYPE VEHICLE**
FAHRZEUGSTEUERUNGSVORRICHTUNG, FAHRZEUGSTEUERUNGSVERFAHREN UND SATTELARTIGES FAHRZEUG
DISPOSITIF DE COMMANDE DE VÉHICULE, PROCÉDÉ DE COMMANDE DE VÉHICULE ET VÉHICULE À MONTURE À SELLE

(30) Priority: 18.05.2012 JP 2012115115
(43) Date of publication of application: 25.03.2015
(73) Proprietor: Yamaha Hatsudoki Kabushiki Kaisha, Iwata-shi, Shizuoka 438-8501 (JP)
(72) Inventor: ISHIOKA, Kazutoshi, Iwata-shi Shizuoka 438-8501 (JP)
(74) Representative: Grünecker Patent- und Rechtsanwälte PartG mbB
(86) International application number: PCT/JP2013/063845
(87) International publication number: WO 2013/172459

(56) References cited:
- EP-A1- 0 306 229
- EP-A2- 0 352 110
- EP-A2- 0 728 921
- EP-A2- 1 247 968
- JP-A- S62 110 536
- JP-A- 2004 168 200
- JP-A- 2007 051 603
- JP-A- 2010 209 729
- JP-A- 2010 242 691
- US-A- 4 589 302
- US-A- 5 046 177
- US-A- 5 545 106

## Description

The present invention relates to a vehicle control device, a vehicle control method, and a saddle-ride type vehicle, and more particularly, to a technology for controlling a gear ratio of a continuously variable transmission and an opening degree of a throttle valve.

Hitherto, there has been known a vehicle control device for controlling a gear ratio of a continuously variable transmission and an opening degree of a throttle valve (throttle opening degree) (for example, Japanese Patent No. 3754188). In the related-art control, first, a required drive force is calculated based on a vehicle speed and an amount of accelerator operation by a driver (accelerator operation amount) . Then, a target speed of revolutions of an engine (hereinafter referred to as "target engine revolution speed") and a target throttle opening degree are calculated so as to achieve the required drive force . As the target engine revolution speed, the speed of revolutions for achieving the best fuel efficiency is set. EP0352110 and US5046177 represent some prior art regarding throttle control on CVT vehicles.

A motorcycle is more significantly affected in terms of ride comfort by the speed of revolutions of the engine (hereinafter referred to as "engine revolution speed") as compared to a four-wheeled automobile. Therefore, there is a demand for setting the engine revolution speed to the speed of revolutions for achieving a comfortable ride. However, in the related-art control, the speed of revolutions for achieving the best fuel efficiency is set as the target engine revolution speed, and hence it is difficult to set the engine revolution speed to the speed of revolutions for achieving a comfortable ride. That is, in the related-art control, the engine revolution speed is not always set to the speed of revolutions that matches with the accelerator operation by the driver.

Further, in the above-mentioned Patent Literature, the target throttle opening degree is calculated based on the required drive force, but when there is a range in the throttle opening degree based on the required drive force, the target throttle opening degree may vary and not be determined to one point.

The present invention has an obj ect to provide a vehicle control device, a vehicle control method, and a saddle-ride type vehicle, which are capable of setting the engine revolution speed to the speed of revolutions for achieving a comfortable ride, and capable of stabilizing the target throttle opening degree as necessary.

According to the present invention said object is solved by a vehicle control device having the features of independent claim 1. Moreover, said object is solved by a vehicle control method for controlling a gear ratio of a continuously variable transmission and a throttle opening degree having the features of independent claim 8. Prefeferred embodiments are laid down in the dependent claims.

Accordingly, there is provided a vehicle control device for controlling a gear ratio of a continuously
variable transmission and a throttle opening degree, the vehicle control device including: a target engine revolution speed calculation unit; a target gear ratio calculation unit; a target engine torque calculation unit; and a target throttle opening degree calculation unit. The target engine revolution speed calculation unit calculates a target engine revolution speed. The target gear ratio calculation unit calculates a target gear ratio based on the target engine revolution speed. The target engine torque calculation unit calculates a target engine torque based on an accelerator operation amount and the target engine revolution speed. The target throttle opening degree calculation unit calculates a target throttle opening degree based on the target engine revolution speed and the target engine torque. Further, the target throttle opening degree calculation unit outputs a target throttle opening degree different from the calculated target throttle opening degree under a predetermined condition.

Further, according to one embodiment of the present invention, there is provided a vehicle control method for controlling a gear ratio of a continuously variable transmission and a throttle opening degree, the vehicle control method including: a target engine revolution speed calculation step; a target gear ratio calculation step; a target engine torque calculation step; and a target throttle opening degree calculation step. In the target engine revolution speed calculation step, a target engine revolution speed is calculated. In the target gear ratio calculation step, a target gear ratio is calculated based on the target engine revolution speed. In the target engine torque calculation step, a target engine torque is calculated based on an accelerator operation amount and the target engine revolution speed. In the target throttle opening degree calculation step, a target throttle opening degree is calculated based on the target engine revolution speed and the target engine torque. Further, in the target throttle opening degree calculation step, a target throttle opening degree different from the calculated target throttle opening degree is output under a predetermined condition.

Further, according to one embodiment of the present invention, there is provided a saddle-ride type vehicle, including the above-mentioned vehicle control device according to one embodiment of the present invention.

### Advantageous Effects of Invention

According to one embodiment of the present invention, the target engine revolution speed is calculated, and the target engine torque and the target throttle opening degree are calculated based on this target engine revolution speed. Therefore, the engine revolution speed can be set to the speed of revolutions for achieving a comfortable ride. Further, under the predetermined condition, the target throttle opening degree different from the calculated target throttle opening degree is used. Therefore, the target throttle opening degree can be stabilized as necessary.

Note that, the target engine revolution speed is calculated with use of a map that associates the accelerator operation amount with the engine revolution speed, for example. This map may be not only a map that directly associates the accelerator operation amount with the engine revolution speed, but also a map that indirectly associates the accelerator operation amount with the engine revolution speed. That is, the map may include a map that associates the accelerator operation amount with the throttle opening degree, and a map that associates this throttle opening degree with the engine revolution speed.

### Brief Description of Drawings

FIG. 1 is a side view of a motorcycle including a control device according to one embodiment of the present invention.
FIG. 2 is a block diagram illustrating the configuration of the motorcycle.
FIG. 3 is a graph showing the summary of control.
FIG. 4 is a time chart showing a temporal change of a final drive wheel torque target value.
FIG. 5 is a block diagram illustrating the function of the control device.
FIG. 6 is a graph showing an example of an engine revolution speed map.
FIG. 7 is a graph showing an example of a relationship between a drive state value and a correction amount.
FIGS. 8A to 8C are examples of maps to be used for calculating a load state value.
FIG. 9 is a graph showing an example of a first engine torque map (first output characteristic information).
FIG. 10 is a block diagram illustrating the function of a conversion unit.
FIG. 11 is a block diagram illustrating an example of changes of a basic drive wheel torque target value and the final drive wheel torque target value based on a transfer function of a filter function to be used by a drive force target correction unit.
FIG. 12 is a block diagram illustrating the function of a reverse conversion unit.
FIG. 13 is a graph showing the first engine torque map according to a modified example.
FIG. 14 is a block diagram illustrating the function of the conversion unit according to the modified example.
FIGS. 15A to 15B are time charts showing the effect of a mode in which inertia torque is used only in the reverse conversion unit. FIG. 15A is a time chart of a mode in which both the conversion unit and the reverse conversion unit use the inertia torque, and FIG. 15B is a time chart of the mode in which only the reverse conversion unit uses the inertia torque.
FIG. 16 is a block diagram illustrating the function of the control device according to a first modified example.
FIG. 17 is a flow chart illustrating the operation of the control device according to the first modified example.
FIG. 18 is a block diagram illustrating the function of the control device according to a second modified example.
FIG. 19 is a flowchart illustrating the operation of the control device according to the second modified example.
FIG. 20 is a graph showing the function and the operation of the control device according to the second modified example.
FIG. 21 is a block diagram illustrating the function of the control device according to a third modified example.
FIG. 22 is a flow chart illustrating the operation of the control device according to the third modified example.
FIG. 23 is a graph showing the function and the operation of the control device according to the third modified example.
FIG. 24 is a graph showing the function and the operation of the control device according to the third modified example.

### Description of Embodiments

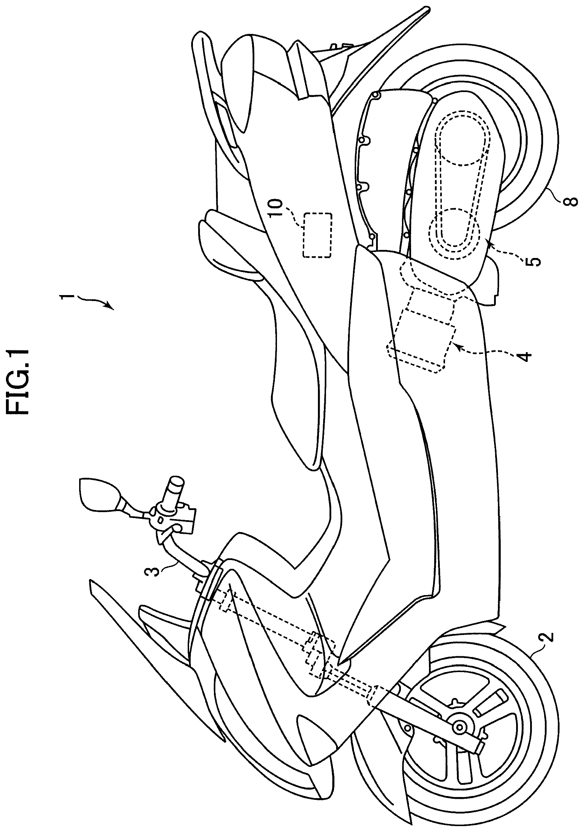

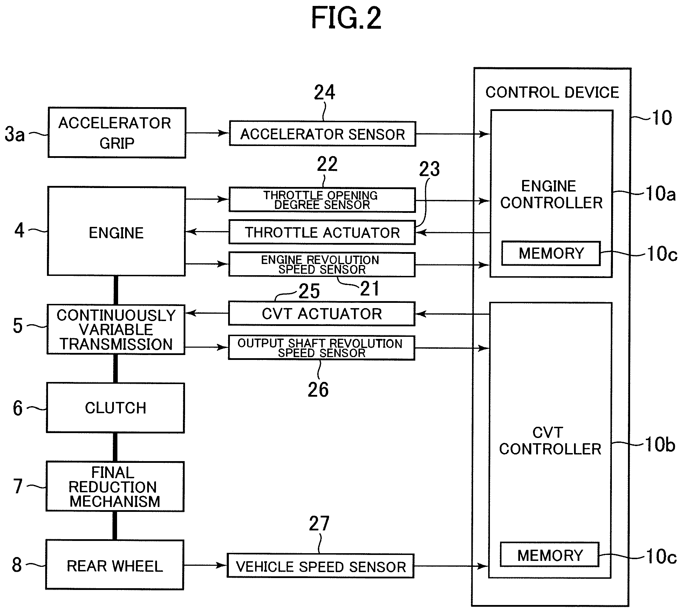

Now, one embodiment of the present invention is described with reference to the drawings. FIG. 1 is a side view of a motorcycle 1 including a control device 10 according to the embodiment of the present invention. FIG. 2 is a block diagram illustrating the configuration of the motorcycle 1. A saddle-ride type vehicle is a vehicle on which a user sits astride a seat, and examples thereof include a motorcycle (including a scooter), a four-wheeled buggy, and a snowmobile.

As illustrated in FIG. 1, the motorcycle 1 includes, in a front part thereof, a front wheel 2 and a steering handle 3 for laterally steering the front wheel 2. The steering handle 3 is provided with an accelerator grip 3a (seeFIG. 2) . The accelerator grip 3a is provided with an accelerator sensor 24 for detecting the operation amount of the accelerator grip 3a (accelerator operation amount).

As illustrated in FIG. 2, the motorcycle 1 includes an engine 4. Further, the motorcycle 1 includes, in a torque transmission path from the engine 4 to a rear wheel 8 serving as a drive wheel, a continuously variable transmission (hereinafter abbreviated to "CVT") 5, a clutch 6, and a final reduction mechanism 7. In this embodiment, the CVT 5 is arranged on the downstream of the engine 4, and the clutch 6 is arranged on the downstream of the CVT 5. Further, the final reduction mechanism 7 is arranged between the clutch 6 and the rear wheel 8.

The engine 4 includes a cylinder, a piston arranged in the cylinder, a crankshaft coupled to the piston, and the like. The motorcycle 1 includes an engine revolution speed sensor 21 for detecting the engine revolution speed. Further, the engine 4 includes, in an intake path connected to a combustion chamber thereof, a throttle valve for controlling an air amount to be supplied to the engine 4, and an injector for injecting fuel toward the intake path. The injector injects fuel of an amount corresponding to the air amount to be supplied to the engine, that is, an amount corresponding to the opening degree of the throttle valve (hereinafter referred to as "throttle opening degree"). The motorcycle 1 includes a throttle opening degree sensor 22 for detecting the throttle opening degree, and a throttle actuator 23 for controlling the opening degree of the throttle valve.

The CVT 5 includes an input shaft that interlocks with the crankshaft, a drive pulley arranged on the input shaft, an output shaft, a driven pulley arranged on the output shaft, and a belt looped around the drive pulley and the driven pulley so as to transmit the rotation (torque) of the drive pulley to the driven pulley. The motorcycle 1 includes a CVT actuator 25 for controlling the gear ratio of the CVT 5. For example, the CVT actuator 25 moves one of two sheaves forming the drive pulley to control the gear ratio. Alternatively, the CVT actuator 25 may move one of two sheaves forming the driven pulley to control the gear ratio.

As illustrated in FIG. 2, the motorcycle 1 includes the control device 10. The output signals of the above-mentioned sensors 21, 22, 24, 26, and 27 are input to the control device 10. The above-mentioned actuators 23 and 25 are driven based on the output signals of the control device 10. The control device 10 controls the engine 4 and the CVT 5 based on the outputs of the sensors 21, 22, 24, 26, and 27. In this embodiment, the control device 10 particularly controls the gear ratio of the CVT 5 through the CVT actuator 25. Further, the control device 10 controls the throttle opening degree through the throttle actuator 23.

The control device 10 first calculates a targeted engine revolution speed based on the accelerator operation amount detected by the accelerator sensor 24. Then, the control device 10 calculates a targeted gear ratio (target gear ratio) and a targeted throttle opening degree (target throttle opening degree) based on the target engine revolution speed. The control device 10 drives the actuators 23 and 25 so that the actual gear ratio of the CVT 5 and the actual throttle opening degree are set to the target gear ratio and the target throttle opening degree, respectively. The processing to be executed by the control device 10 is described in detail later.

Note that, the control device 10 in this embodiment includes, as illustrated in FIG. 2, an engine controller 10a and a CVT controller 10b. The controllers 10a and 10b each include a memory 10c and a microprocessor for executing a program stored in the memory 10c. Further, the memory 10c stores maps to be used for control of the engine 4 and the CVT 5. The two controllers 10a and 10b are connected to each other, and communicate with each other based on a predefined protocol. One of the controllers 10a and 10b notifies the other controller 10b or 10a of data on the operation state of the motorcycle 1 detected by the sensors 21, 22, 24, 26, and 27, and the result of the processing by the one of the controllers 10a and 10b. In this embodiment, the outputs of the engine revolution speed sensor 21, the throttle opening degree sensor 22, and the accelerator sensor 24 are input to the engine controller 10a. The engine controller 10a notifies the CVT controller 10b of the speed of revolutions and the throttle opening degree detected by the sensors 21, 22, and 24. On the other hand, outputs of an output shaft rotation sensor 26 and a vehicle speed sensor 27 are input to the CVT controller 10b. The CVT controller 10b notifies the engine controller 10a of the speed of revolutions and the vehicle speed detected by the sensors 26 and 27, and the result of the processing by the CVT controller 10b (for example, the target engine revolution speed and the target gear ratio obtained by processing described later).

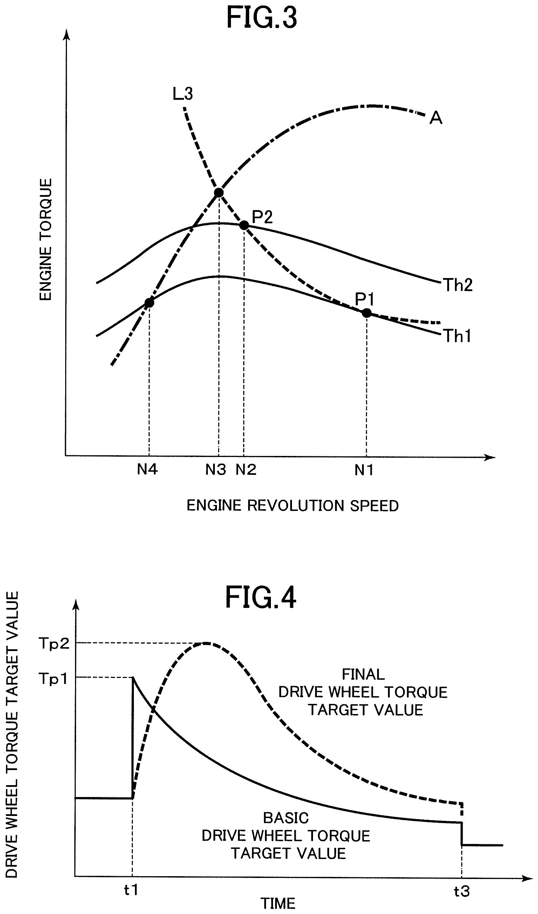

The control to be executed by the control device 10 is described. FIG. 3 is a graph showing the summary of the control. In FIG. 3, the horizontal axis represents an engine revolution speed, and the vertical axis represents engine torque. FIG. 3 shows two torque curves each representing the relationship between the engine torque and the engine revolution speed. The two torque curves are a torque curve when the throttle opening degree is Th1 and a torque curve when the throttle opening degree is Th2.

Further, in FIG. 3, the line A is a curve representing drive points for achieving the best fuel efficiency (hereinafter referred to as "best fuel efficiency curve").

The control device 10 in this embodiment has three control modes. The first mode is a fuel efficient mode, the second mode is a normal mode, and the third mode is a comfortable drive mode.

First, the summary of the fuel efficient mode is described. The control device 10 first calculates a target engine revolution speed as a basic value (hereinafter referred to as "basic target engine revolution speed") based on the throttle opening degree corresponding to the accelerator operation amount detected by the accelerator sensor 24 (hereinafter referred to as "basic throttle opening degree"). In FIG. 3, the throttle opening degree Th1 is the basic throttle opening degree corresponding to the accelerator operation amount, and an engine revolution speed N1 is the basic target engine revolution speed. In the fuel efficient mode, the control device 10 sets the speed of revolutions lower than the basic target engine revolution speed N1 as the target engine revolution speed (hereinafter referred to as "final target engine revolution speed"). Specifically, the control device 10 sets, as the final target engine revolution speed, the speed of revolutions N2 obtained by correcting the target engine revolution speed from the basic target engine revolution speed N1 to be close to an engine revolution speed N3 shown in FIG. 3. In this case, the engine revolution speed N3 is an engine revolution speed at a drive point P3 on the best fuel efficiency curve A, which can obtain the same engine output (engine torque × engine revolution speed) as that at a drive point P1 (engine revolution speed N1 and basic throttle opening degree Th1). In FIG. 3, the line L3 is an equivalent output curve representing the drive points that can obtain the same engine output as that at the drive point P1.

Further, the control device 10 sets the target throttle opening degree so that the final target engine revolution speed becomes lower than the basic target engine revolution speed N1, while the drive force obtained at the drive point P1 (for example, torque of the rear wheel 8) is maintained. That is, the control device 10 sets, as the target throttle opening degree, the throttle opening degree Th2 at a drive point P2 at which the same drive force as that at the drive point P1 can be obtained and the engine revolution speed becomes the final target engine revolution speed N2. Note that, the torque of the rear wheel 8 is proportional to the engine output. Therefore, the drive point P2 is a drive point on the equivalent output curve L3. The above is the summary of the fuel efficient mode.

The summary of the normal mode is described. The control device 10 calculates the target engine revolution speed N1 as a basic value based on the basic throttle opening degree Th1. In the normal mode, the control device 10 sets this target engine revolution speed N1 as the ultimate target engine revolution speed. The control device 10 calculates the target gear ratio based on the target engine revolution speed N1. Further, the control device 10 sets the basic throttle opening degree Th1 as the target throttle opening degree.

The summary of the comfortable drive mode is described. The control device 10 calculates the target engine revolution speed N1 as a basic value based on the basic throttle opening degree Th1. In the comfortable drive mode, the target engine revolution speed N1 is set as the ultimate target engine revolution speed, and the target gear ratio is calculated based on the target engine revolution speed N1. The control device 10 calculates, based on the basic throttle opening degree Th1 and the target engine revolution speed N1, a target value for the drive force (for example, the torque of the rear wheel 8, hereinafter referred to as "rear wheel torque") of the vehicle (hereinafter referred to as "basic drive wheel torque target value"). Under a state in which the acceleration request from the driver satisfies a correction condition set in advance, the control device 10 filters the basic drive wheel torque target value, and sets the result as the ultimate drive wheel torque target value (hereinafter referred to as "final drive wheel torque target value"). This filter is set so that the final drive wheel torque target value changes gentler than the basic drive wheel torque target value. The control device 10 calculates the target throttle opening degree based on the final drive wheel torque target value.

FIG. 4 is a time chart showing the temporal change of the final drive wheel torque target value. In FIG. 4, time t1 represents a time point at which the accelerator operation amount increases and the acceleration request from the driver satisfies a correction condition set in advance. Time t3 represents a time point at which the accelerator operation amount decreases and the acceleration request does not satisfy the correction condition set in advance. As shown in FIG. 4, the basic drive wheel torque target value sharply rises at time t1 due to the increase of the accelerator operation amount, and then gently decreases. In contrast, the final drive wheel torque target value gently rises up to a value Tp2 higher than a peak value Tp1 of the basic drive wheel torque target value. After that, the final drive wheel torque target value decreases gentler than the basic drive wheel torque target value. In the comfortable drive mode, the control device 10 calculates the target throttle opening degree based on the basic throttle opening degree Th1 so that the final drive wheel torque target value changes as described above. The above is the summary of the comfortable drive mode.

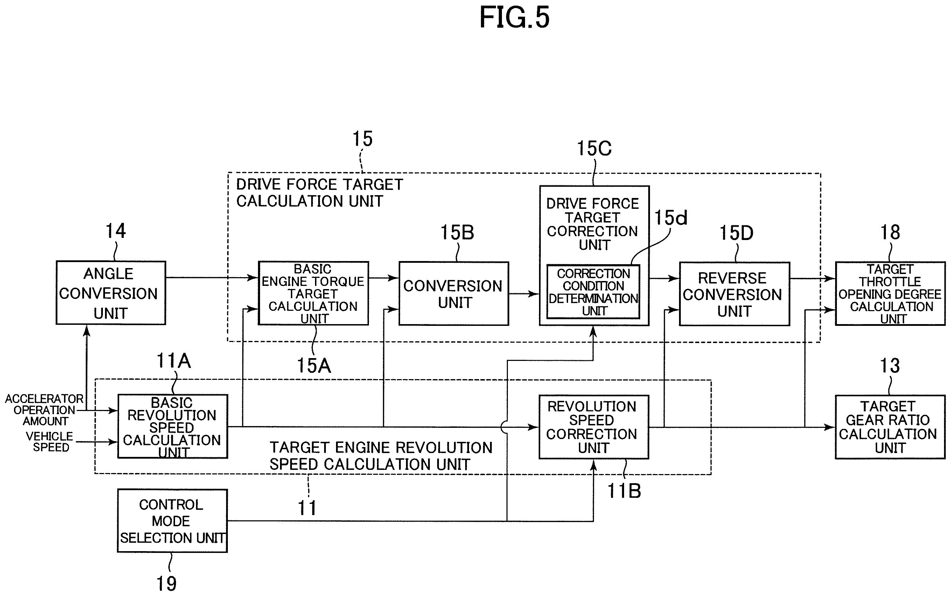

FIG. 5 is a block diagram illustrating the function of the control device 10. Note that, the processing represented by each block may be executed by any one of the engine controller 10a and the CVT controller 10b.

The control device 10 includes a control mode selection unit 19. The control mode selection unit 19 selects the control mode to be executed by the control device 10 from the above-mentioned three modes. This selection can be made by various methods. For example, a mode selection switch to be operated by the driver is provided to the steering handle 3. The control mode selection unit 19 selects the control mode based on a signal received from the switch.

Alternatively, the control mode selection unit 19 may select the control mode based on the vehicle drive state . For example, when a constant speed running is continued for a predetermined time period or more, or when the frequency of change of the accelerator operation amount per unit time is smaller than a first threshold value, the control mode selection unit 19 selects the fuel efficient mode. Further, when the frequency of change of the accelerator operation amount is larger than a second threshold value, or when the accelerator operation amount is larger than a threshold value, the control mode selection unit 19 selects the comfortable drive mode. Further, the control mode selection unit 19 selects the normal mode when the vehicle drive state does not correspond to any of the selection condition for the fuel efficient mode and the selection condition for the comfortable drive mode.

The processing for calculating the target gear ratio is described. The control device 10 includes, as a function thereof, a target engine revolution speed calculation unit 11 and a target gear ratio calculation unit 13. The target engine revolution speed calculation unit 11 includes a basic revolution speed calculation unit 11A and a revolution speed correction unit 11B. The control device 10 repeatedly executes a series of processing of those functional units 11A, 11B, and 13 at a predefined cycle.

The basic revolution speed calculation unit 11A calculates the above-mentioned basic target engine revolution speed (N1 of FIG. 3) based on the accelerator operation amount detected by the accelerator sensor 24. Specifically, the basic revolution speed calculation unit 11A calculates the basic target engine revolution speed by the following processing.

The memory 10c stores a map that associates the accelerator operation amount with the engine revolution speed (hereinafter referred to as "engine revolution speed map"). The basic revolution speed calculation unit 11A refers to the engine revolution speed map to calculate the engine revolution speed corresponding to the accelerator operation amount detected by the accelerator sensor 24, and sets the engine revolution speed as the basic target engine revolution speed.

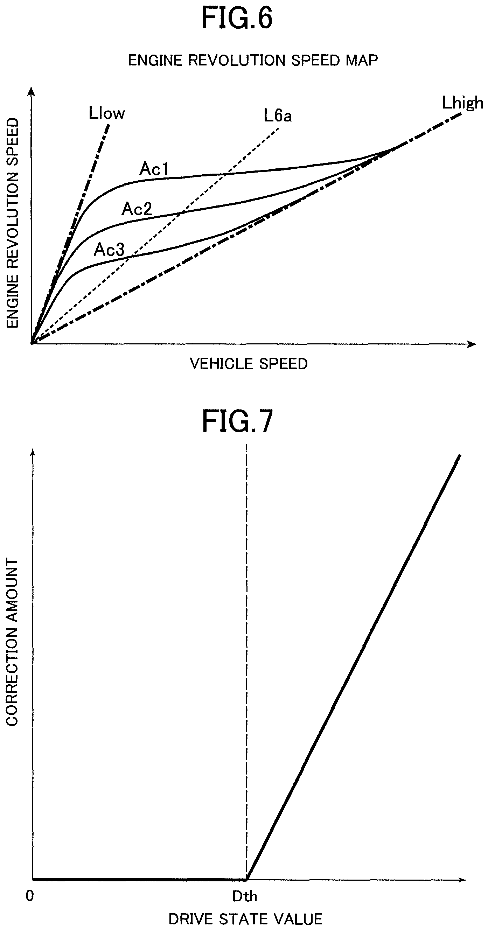

FIG. 6 is a graph showing an example of the engine revolution speed map. In the engine revolution speed map of this embodiment, the vehicle speed, the accelerator operation amount, and the engine revolution speed are associated with each other. In FIG. 6, the horizontal axis represents a vehicle speed, and the vertical axis represents an engine revolution speed. Further, lines each representing the relationship between the vehicle speed and the engine revolution speed are shown for a plurality of accelerator operation amounts (in FIG. 6, Ac1 to Ac3, Ac1>Ac2>Ac3). The slope of the straight line passing an arbitrary drive point (for example, straight line L6a) is a total reduction ratio of the torque transmission path from the engine 4 to the rear wheel 8. The straight line Llow having the largest slope represents the relationship between the vehicle speed and the engine revolution speed under a state in which the gear ratio is set to LOW (maximum reduction ratio). The straight line Lhigh having the smallest slope represents the relationship between the vehicle speed and the engine revolution speed under a state in which the gear ratio is set to HIGH (minimum reduction ratio). In the example of FIG. 6, when the accelerator operation amount is fixed, the engine revolution speed rises in proportion to the vehicle speed in a low speed drive region (drive points on the line Llow) and a high speed drive region (drive points on the line Lhigh). Further, in an intermediate speed drive region (drive points between the straight line Llow and the straight line Lhigh), the change rate of the engine revolution speed with respect to the vehicle speed is lower as compared to those in the low speed drive region and the high speed drive region. Further, when the vehicle speed is fixed, in the intermediate speed drive region, the engine revolution speed increases as the accelerator operation amount increases.

The basic revolution speed calculation unit 11A refers to the engine revolution speed map to calculate the engine revolution speed corresponding to the accelerator operation amount detected by the accelerator sensor 24 and the vehicle speed detected by the vehicle speed sensor 27, and sets the engine revolution speed as the basic target engine revolution speed.

Note that, in the engine revolution speed map, the throttle opening degree, the vehicle speed, and the engine revolution speed may be associated with each other. In this case, the memory 10c stores in advance a map or a relational expression that associates the throttle opening degree with the accelerator operation amount. The basic revolution speed calculation unit 11A uses this map or relational expression to calculate the throttle opening degree corresponding to the accelerator operation amount detected by the accelerator sensor 24. Then, the basic revolution speed calculation unit 11A refers to the engine revolution speed map to calculate the engine revolution speed corresponding to the calculated throttle opening degree and the vehicle speed, and sets the engine revolution speed as the basic target engine revolution speed.

The basic revolution speed calculation unit 11A may execute filtering processing. For example, the basic revolution speed calculation unit 11A may include a low-pass filter so as to subject the engine revolution speed calculated based on the engine revolution speed map to filtering processing, and set the obtained value as the basic target engine revolution speed.

The basic revolution speed calculation unit 11A calculates an engine revolution speed higher than an engine revolution speed for achieving the best fuel efficiency as the basic target engine revolution speed. That is, the basic target engine revolution speed is higher than the engine revolution speed for achieving the best fuel efficiency at the basic throttle opening degree corresponding to the detected accelerator operation amount (best fuel efficiency engine revolution speed) . With reference to FIG. 3, the basic target engine revolution speed N1 is higher than an engine revolution speed N4 for achieving the best fuel efficiency at the basic throttle opening degree Th1 (the engine revolution speed N4 is the speed of revolutions at a drive point on the best fuel efficiency curve A). The engine revolution speed of the engine revolution speed map is associated with the accelerator operation amount so that such a basic target engine revolution speed is calculated. By setting the basic engine revolution speed in this way, the engine output obtained when the throttle opening degree is set maximum is increased. Therefore, the acceleration response of the motorcycle 1 can be improved.

Note that, the basic target engine revolution speed higher than the best fuel efficiency engine revolution speed may not necessarily be calculated at all of the drive points. For example, during a drive state in which the accelerator operation amount is relatively large (for example, maximum) and the vehicle speed is low, the basic target engine revolution speed may be lower than the best fuel efficiency engine revolution speed. With this, the acceleration response of the motorcycle 1 can be improved. In other words, during a process of increasing the engine revolution speed, part of the engine torque is consumed as inertia torque for increasing the engine revolution speed. In the engine revolution speed map, the basic target engine revolution speed is associated with a larger accelerator operation amount than the best fuel efficiency engine revolution speed. In this manner, when the driver increases the accelerator operation amount during running, consumption of the engine torque as the inertia torque can be suppressed. As a result, the acceleration response of the motorcycle 1 can be improved.

Note that, the basic revolution speed calculation unit 11A may correct the basic target engine revolution speed depending on the vehicle drive state. For example, the basic revolution speed calculation unit 11A may increase the basic target engine revolution speed when, for example, the accelerator operation amount sharply increases and the change rate thereof exceeds a threshold value.

The revolution speed correction unit 11B corrects the basic target engine revolution speed, and calculates the corrected revolution speed as the above-mentioned final target engine revolution speed when the fuel efficient mode is selected. Specifically, the revolution speed correction unit 11B calculates, as the final target engine revolution speed, the speed of revolutions (N2 of FIG. 3) closer to the best fuel efficiency engine revolution speed (N3 of FIG. 3) with respect to the basic target engine revolution speed. In other words, the revolution speed correction unit 11B corrects the target engine revolution speed from the basic target engine revolution speed to be close to the best fuel efficiency engine revolution speed, and sets the target engine revolution speed obtained as a result as the final target engine revolution speed. Note that, the revolution speed correction unit 11B does not perform the correction when the fuel efficient mode is not selected, and outputs the basic target engine revolution speed as the final target engine revolution speed.

For example, the processing of the revolution speed correction unit 11B is executed as follows. The revolution speed correction unit 11B calculates a drive state value based on at least one parameter selected from the accelerator operation amount, the vehicle speed, an accelerator operation amount change rate, which is a differential value of the accelerator operation amount, and acceleration, and calculates the correction amount for the target engine revolution speed based on the drive state value. Then, the revolution speed correction unit 11B adds or subtracts the correction amount to or from the basic target engine revolution speed, and sets the calculation result as the final target engine revolution speed. The drive state value is a value representing the degree of stability of the drive state. For example, as the degree of stability becomes higher, that is, as acceleration or deceleration is less likely to occur, the drive state value increases.

FIG. 7 is a graph showing an example of the relationship between the drive state value and the correction amount. The memory 10c stores data obtained by quantifying the relationship shown in FIG. 7 (for example, a map or an arithmetic expression) . As shown in FIG. 7, for example, when the drive state value is small, that is, when the degree of stability of the drive state is small, the correction value is set to 0, and the correction of the basic target engine revolution speed to be close to the best fuel efficiency engine revolution speed is limited. When the drive state value exceeds Dth as a threshold value, the correction value gradually increases in accordance with the drive state value. In the example shown in FIG. 7, the correction amount is proportional to the drive state value. The relationship between the drive state value and the correction amount may be appropriately changed. For example, the correction amount and the drive state value may be represented by an arbitrary curve so that the correction amount increases in accordance with the drive state value. Alternatively, the correction amount may increase in a stepped manner in accordance with the drive state value. Alternatively, the correction amount itself may be set with an upper limit.

For example, the revolution speed correction unit 11B calculates the drive state value as follows. The revolution speed correction unit 11B calculates a first load state value based on the accelerator operation amount and the vehicle speed. Further, the revolution speed correction unit 11B calculates a second load state value based on the change rate of the accelerator operation amount. Further, the revolution speed correction unit 11B calculates a third load state value based on the vehicle speed and the vehicle acceleration. The revolution speed correction unit 11B calculates the drive state value with use of all or a part of those load state values. Each of the load state values is a value that comprehensively evaluates the load applied to the engine 4 and the possibility that the load may change, and represents the degree of stability of the drive state similarly to the drive state value. For example, as the load state value becomes larger, the vehicle drive state is more stable, and the change due to an acceleration instruction or the like less occurs. Further, as the load state value becomes smaller, the vehicle drive state may change with high possibility, and it is expected that acceleration or deceleration frequently occurs.

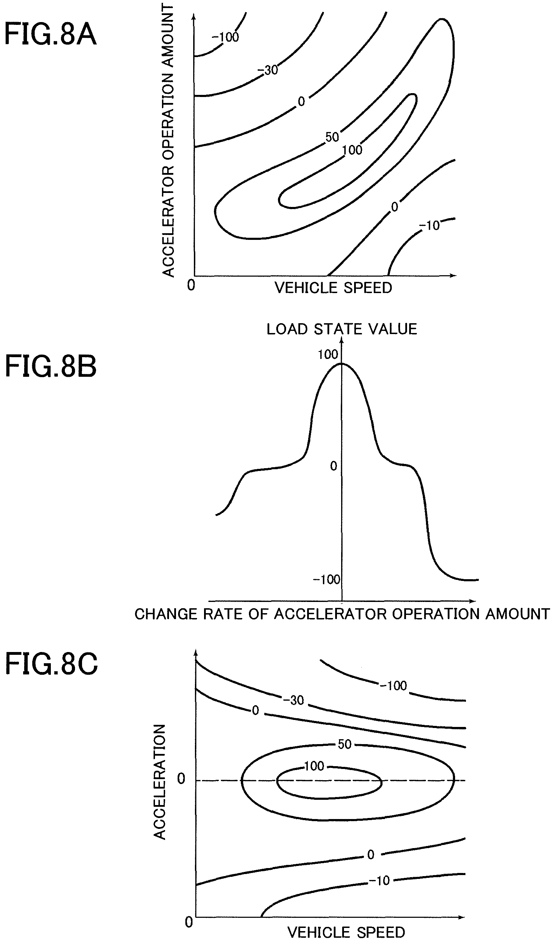

FIG. 8A shows an example of a map that associates the accelerator operation amount, the vehicle speed, and the first load state value with each other. In FIG. 8A, the solid line represents the contour of the first load state value. In this map, the first load state value is set as high in a drive region in which the drive state is inferred to be stable (for example, a region in which both of the vehicle speed and the accelerator operation amount are at intermediate levels). For example, the revolution speed correction unit 11B refers to this map to calculate the first load state value based on the accelerator operation amount and the vehicle speed detected based on the outputs of the sensors.

FIG. 8B shows an example of a map that associates the change rate of the accelerator operation amount with the second load state value. Also in this map, the second load state value is set as high in a drive region in which the drive state is inferred to be stable, that is, a drive region in which the change rate of the accelerator operation amount is small. The revolution speed correction unit 11B calculates the change rate of the accelerator operation amount, and then refers to this map to calculate the second load state value corresponding to the calculated change rate of the accelerator operation amount.

FIG. 8C shows an example of a map that associates the vehicle speed, the vehicle acceleration, and the third load state value with each other. In FIG. 8C, the solid line represents the contour of the third load state value. Also in this map, the third load state value is set as high in a drive region in which the drive state is inferred to be stable, specifically, a drive region in which the vehicle speed is at an intermediate level and the acceleration is small. The revolution speed correction unit 11B refers to this map to calculate the third load state value corresponding to the vehicle speed detected based on the output of the sensor and the acceleration calculated based on the vehicle speed.

Then, the revolution speed correction unit 11B selects the load state value to be used for calculation of the drive state value. For example, when the signs of all of the load state values described above match with each other, the revolution speed correction unit 11B calculates the drive state value with use of all of the load state values. On the other hand, when the signs of all of the load state values do not match with each other, the revolution speed correction unit 11B does not use any of the load state values, and does not calculate the drive state value in current processing. That is, the revolution speed correction unit 11B does not update the drive state value obtained by the previous processing .

Alternatively, the revolution speed correction unit 11B may select two or three of the first load state value, the second load state value, and the third load state value, which have signs that match with each other, and may calculate the drive state value with use of the selected load state values.

After that, the revolution speed correction unit 11B calculates the drive state value based on the selected load state values. Specifically, the revolution speed correction unit 11B calculates the drive state value based on the selected load state values and the drive state value obtained by the previous processing. For example, the revolution speed correction unit 11B calculates a product of the selected load state values, adds the product to the drive state value obtained by the previous processing, and sets the result of the addition as a new drive state value. Alternatively, the revolution speed correction unit 11B may calculate the sum of the selected load state values, add the sum to the drive state value obtained by the previous processing, and set the result of the addition as the new drive state value. Alternatively, the revolution speed correction unit 11B may calculate an average value or a median of the selected load state values, add the average value or the median to the drive state value obtained by the previous processing, and set the result of the addition as the new drive state value. Note that, when the drive state value becomes excessively large, for example, when the constant speed running is continued for a long period of time, the revolution speed correction unit 11B may calculate a drive state value set in advance without updating the drive state value.

The revolution speed correction unit 11B calculates the correction amount for the basic target engine revolution speed based on the drive state value calculated as described above . For example, the revolution speed correction unit 11B uses the above-mentioned map exemplified in FIG. 7 or an arithmetic expression to calculate the correction amount based on the drive state value. Then, the revolution speed correction unit 11B subtracts the correction amount from the basic target engine revolution speed, and sets the result as the final target engine revolution speed. Note that, in order to suppress drastic variation of the correction amount, the calculation may be made based on not only the drive state value but also the correction amounts obtained by the processing of the past. For example, the revolution speed correction unit 11B may set the average value of the correction amounts calculated within a predetermined period as the correction amount obtained by the current processing. The revolution speed correction unit 11B may execute filtering processing on the correction amount, and set the result as the correction amount obtained by the current processing.

Note that, when the revolution speed correction unit 11B subtracts the correction amount from the basic target engine revolution speed and the value obtained as a result falls below the best fuel efficiency engine revolution speed (that is, N3 of FIG. 3), the revolution speed correction unit 11B sets the best fuel efficiency engine revolution speed as the final target engine revolution speed. Further, when the value obtained by subtracting the correction amount from the basic target engine revolution speed is smaller than a lower limit value of the engine revolution speed determined based on the current vehicle speed, the revolution speed correction unit 11B sets this lower limit value as the final target engine revolution speed. The lower limit value of the engine revolution speed is a value determined based on the vehicle speed and the minimum gear ratio (gear ratio in a state in which the CVT 5 is set to HIGH) . Further, when the basic target engine revolution speed is lower than the best fuel efficiency engine revolution speed, for example, when the basic target engine revolution speed is lower than the engine revolution speed N3 shown in FIG. 3, the revolution speed correction unit 11B may set the basic target engine revolution speed as the final target engine revolution speed without executing the correction described above.

The correction to be performed by the revolution speed correction unit 11B is not limited to that described above. For example, the revolution speed correction unit 11B may multiply a predetermined value by the drive state value, and set the result as the correction amount. Further, an input device may be installed on the vehicle so that a rider can input the degree of fuel efficiency. The best fuel efficiency engine revolution speed and the basic target engine revolution speed may be divided proportionally based on the information (value) obtained from the input device, and the result may be set as the final target engine revolution speed.

The target gear ratio calculation unit 13 calculates the target gear ratio so that the actual engine revolution speed becomes the final target engine revolution speed. That is, the target gear ratio calculation unit 13 calculates the target gear ratio based on the final target engine revolution speed and the speed of revolutions of the mechanism on the downstream side with respect to the CVT 5. The target gear ratio calculation unit 13 in this embodiment calculates the target gear ratio based on the final target engine revolution speed and the vehicle speed detected by the vehicle speed sensor 27. For example, the target gear ratio calculation unit 13 calculates the target gear ratio based on a value obtained by dividing the final target engine revolution speed by the vehicle speed, and the reduction ratio of the final reduction mechanism 7. When the gear ratio obtained based on the value obtained by dividing the final target engine revolution speed by the vehicle speed and the reduction ratio of the final reduction mechanism 7 exceeds or falls below the upper limit (LOW) or the lower limit (HIGH) of the gear ratio of the CVT 5, the target gear ratio calculation unit 13 sets the upper limit or the lower limit as the target gear ratio.

The processing for calculating the target throttle opening degree is described. As illustrated in FIG. 5, the control device 10 includes, as a function thereof, an angle conversion unit 14, a drive force target calculation unit 15, and a target throttle opening degree calculation unit 18. The drive force target calculation unit 15 includes a basic engine torque target calculation unit 15A, a conversion unit 15B, a drive force target correction unit 15C, and a reverse conversion unit 15D. The control device 10 repeatedly executes a series of processing executed by those functional units 14, 15A, 15B, 15C, and 18 at a cycle set in advance.

The memory 10c stores a map or a relational expression for converting the accelerator operation amount into the throttle opening degree. The throttle opening degree defined by the map or the relational expression has a one-to-one relationship with respect to the accelerator operation amount. For example, the throttle opening degree is proportional to the accelerator operation amount. The angle conversion unit 14 refers to the relational expression or the map, and converts the accelerator operation amount detected by the accelerator sensor 24 into the throttle opening degree, to thereby set the throttle opening degree obtained as a result as the basic throttle opening degree.

The drive force target calculation unit 15 calculates, based on the basic target engine revolution speed, a target value relating to the drive force of the vehicle. In this embodiment, the target value relating to the drive force of the vehicle includes a target value relating to the engine torque (hereinafter referred to as "engine torque target value"), and a target value relating to the torque of the drive wheel (rear wheel 8) (drive wheel torque target value). The engine torque target value is specifically a targeted engine torque or a targeted engine output. Further, the drive wheel torque target value is specifically a targeted rear wheel torque or the power of the rear wheel 8 (rear wheel torque × rotational speed of the rear wheel 8). The target throttle opening degree calculation unit 18 calculates the target throttle opening degree based on those target values. In this embodiment, description is made of an example in which the targeted engine torque is the engine torque target value, and the targeted rear wheel torque is the drive wheel torque target value.

The basic engine torque target calculation unit 15A calculates the engine torque target value based on the basic target engine revolution speed (this target value is hereinafter referred to as "basic engine torque target value"). For example, the basic engine torque target calculation unit 15A calculates the basic engine torque target value by the following processing.

The memory 10c stores in advance first output characteristic information defined by the output characteristics of the engine 4. The first output characteristic information is information representing the relationship among the throttle opening degree, the engine revolution speed, and the engine torque, for example. In the embodiment described herein, the memory 10c stores a map that associates the throttle opening degree, the engine revolution speed, and the engine torque with each other (this map is hereinafter referred to as "first engine torque map") . The basic engine torque target calculation unit 15A refers to the first engine torque map to calculate the engine torque corresponding to the basic target engine revolution speed and the basic throttle opening degree obtained by the angle conversion unit 14, and sets the engine torque as the basic engine torque target value.

Note that, when the engine torque target value is the targeted engine output, the first output characteristic information may be a map or a relational expression that associates the throttle opening degree, the engine revolution speed, and the engine output with each other. Alternatively, the memory 10c may store, as the first output characteristic information, a relational expression or a map that represents the relationship among the accelerator operation amount, the engine revolution speed, and the engine torque. In this case, the basic engine torque target calculation unit 15A refers to the first output characteristic information to calculate the engine torque corresponding to the basic target engine revolution speed and the accelerator operation amount detected by the accelerator sensor 24, and sets the engine torque as the basic engine torque target value.

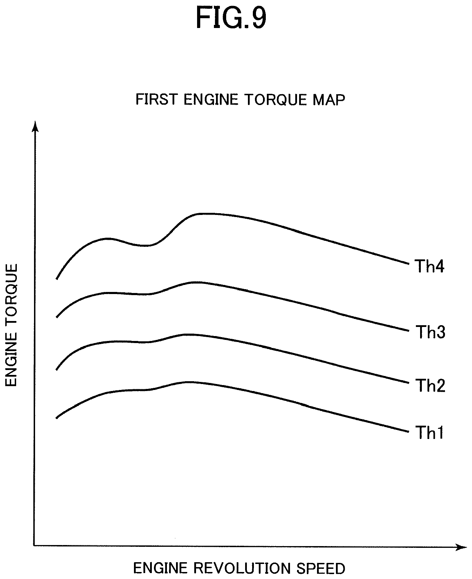

FIG. 9 is a graph showing an example of the first engine torque map. In FIG. 9, the horizontal axis represents an engine revolution speed, and the vertical axis represents engine torque. Further, in FIG. 9, torque curves each representing the relationship between the engine revolution speed and the engine torque are exemplified for throttle opening degrees Th1 to Th4. The basic engine torque target calculation unit 15A refers to such a first engine torque map to calculate the basic engine torque target value corresponding to the basic throttle opening degree and the basic target engine revolution speed.

Note that, the accelerator operation amount, the engine revolution speed, and the engine torque, which are set in the first engine torque map in this embodiment, are values based on the actual output characteristics of the engine 4. The throttle opening degree, the engine revolution speed, and the engine torque set in the first engine torque map may be partially deviated from the actual output characteristics of the engine 4. Specifically, the throttle opening degree, the engine revolution speed, and the engine torque may be set in the first engine torque map so as to have values preferred in view of the ride comfort or the acceleration performance of the motorcycle 1. This mode is described later.

The conversion unit 15B converts, based on the basic target engine revolution speed, the basic engine torque target value into the above-mentioned drive wheel torque target value as the target value relating to the rear wheel torque (the drive wheel torque target value calculated by the conversion unit 15B is hereinafter referred to as "basic drive wheel torque target value"). In other words, the conversion unit 15B in this embodiment converts the targeted engine torque into the targeted rear wheel torque. The torque transmitted from the engine 4 to the rear wheel 8 includes inertia torque of the engine 4, which is generated due to the change of the engine revolution speed, in addition to the torque output from the engine 4. Further, the torque output from the engine 4 is reduced by friction between the belt and the pulley of the CVT 5 or the torque required for bending the belt, and the reduced torque is transmitted to the rear wheel 8. The conversion unit 15B calculates the basic drive wheel torque target value based on the basic engine torque target value in consideration of such addition and loss of the torque.

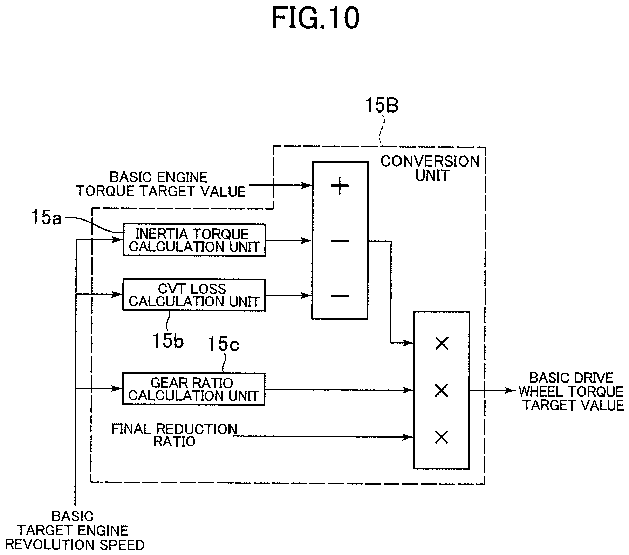

FIG. 10 is a block diagram illustrating the function of the conversion unit 15B. As illustrated in FIG. 10, the conversion unit 15B includes, as the function thereof, an inertia torque calculation unit 15a, a CVT loss calculation unit 15b, and a gear ratio calculation unit 15c.

The inertia torque calculation unit 15a calculates the inertia torque of the engine 4, which is generated due to the change of the engine revolution speed. The inertia torque calculation unit 15a in this embodiment calculates the inertia torque based on the basic target engine revolution speed. Specifically, the inertia torque calculation unit 15a calculates the inertia torque based on the change rate of the basic target engine revolution speed and the moment of inertia of a mechanism (the crankshaft and the piston of the engine 4) on the upstream side with respect to the CVT 5 (inertia torque = moment of inertia × change rate of the basic target engine revolution speed) . Note that, the method of calculating the inertia torque is not limited thereto. For example, the inertia torque calculation unit 15a may calculate the inertia torque based on the change rate of the gear ratio. When the change rate of the gear ratio is used, the inertia torque calculation unit 15a calculates the gear ratio based on, for example, the basic target engine revolution speed and the vehicle speed, and calculates the inertia torque based on the change rate of this gear ratio, the vehicle acceleration, and the above-mentioned moment of inertia.

The CVT loss calculation unit 15b calculates the torque to be lost in the CVT 5 (this torque is hereinafter referred to as "CVT loss") . The CVT loss calculation unit 15b calculates the CVT loss based on, for example, the basic target engine revolution speed, the speed of revolutions of the output shaft, which is detected by the output shaft revolution speed sensor 26, and the torque transmitted through the CVT 5 (torque output from the engine 4) .

The gear ratio calculation unit 15c calculates the gear ratio of the CVT 5. The gear ratio calculation unit 15c in this embodiment calculates the gear ratio of the CVT 5 based on the basic target engine revolution speed. For example, the gear ratio calculation unit 15c calculates the gear ratio based on the vehicle speed detected by the vehicle speed sensor 27, the reduction ratio of the final reduction mechanism 7 (hereinafter referred to as "final reduction ratio"), and the basic target engine revolution speed (for example, gear ratio = rotational speed of axle of rear wheel 8 × final reduction ratio / basic target engine revolution speed) . When the value obtained through this calculation exceeds or falls below the upper limit (LOW) or the lower limit (HIGH) of the gear ratio of the CVT 5, the conversion unit 15B uses this upper limit or lower limit in the processing described later.

As illustrated in FIG. 10, the conversion unit 15B in this embodiment first subtracts the inertia torque calculated by the inertia torque calculation unit 15a and the CVT loss calculated by the CVT loss calculation unit 15b from the basic engine torque target value (the value obtained through this subtraction is referred to as "actually transmitted torque"). After that, the conversion unit 15B multiplies the actually transmitted torque by the final reduction ratio and the gear ratio obtained by the gear ratio calculation unit 15c, and sets the value obtained through this multiplication as the basic drive wheel torque target value.

As described above, the basic drive wheel torque target value may be set to the targeted output of the rear wheel 8. In this mode, for example, the conversion unit 15B may perform the following processing to calculate the basic drive wheel torque target value based on the basic engine torque target value. That is, the conversion unit 15B subtracts the inertia torque from the basic engine torque target value. Then, the conversion unit 15B multiplies the value obtained through the subtraction by the basic target engine revolution speed. After that, the conversion unit 15B subtracts the CVT loss (power lost in the CVT 5) from the value obtained through this multiplication. Then, the conversion unit 15B multiplies the value obtained through this subtraction of the CVT loss by the final reduction ratio and the gear ratio obtained by the gear ratio calculation unit 15c, and sets this result as the basic drive wheel torque target value.

As described above, the control device 10 includes the drive force target correction unit 15C. The drive force target correction unit 15C corrects the basic drive wheel torque target value, and calculates the value obtained through the correction as the final drive wheel torque target value. The drive force target correction unit 15C calculates the final drive wheel torque target value based on the basic drive wheel torque target value with use of a filter function. The filter function in this embodiment is defined so that, as described with reference to FIG. 4, the rising rate of the final drive wheel torque target value is smaller than the rising rate of the basic drive wheel torque target value. For example, when the accelerator operation amount increases, the basic drive wheel torque target value rises. The filter function is defined so that, in such a case, the rising rate of the final drive wheel torque target value becomes smaller than the rising rate of the basic drive wheel torque target value. With this filter function, the vehicle can accelerate smoothly.

In order to achieve such a change of the final drive wheel torque target value, a transfer function G(s) of the filter function in this embodiment includes a first-order lag element G1 (s) represented by the following expression: G1(s)=1/(Txs+1), where T represents a time constant, and s represents an operator.

Further, as described with reference to FIG. 4, when the basic drive wheel torque target value rises, the final drive wheel torque target value rises up to a value (Tp2 in FIG. 4) higher than the basic drive wheel torque target value (Tp1 in FIG. 4), and then decreases toward the basic drive wheel torque target value. The filter function is defined so that the final drive wheel torque target value changes in this manner with respect to the basic drive wheel torque target value. With such a filter function, the acceleration feeling can be maintained.

In order to achieve such a change of the final drive wheel torque target value, the transfer function G(s) of the filter function in this embodiment includes a first-order lag element G2 (s) represented by the following expression: G2 (s) = (P×L×s+1) / (L×s+1), where P represents a proportional gain set to a value larger than 1, and L represents a time constant. Note that, G2 (s) may be deformed as follows: G2(s)=P-(P-1) / (Ls+1), where the term of P represents the proportional element of the transfer function G(s) . Therefore, the transfer function G(s) of the filter function is represented as follows: G(s)=G1(s)xG2(s).

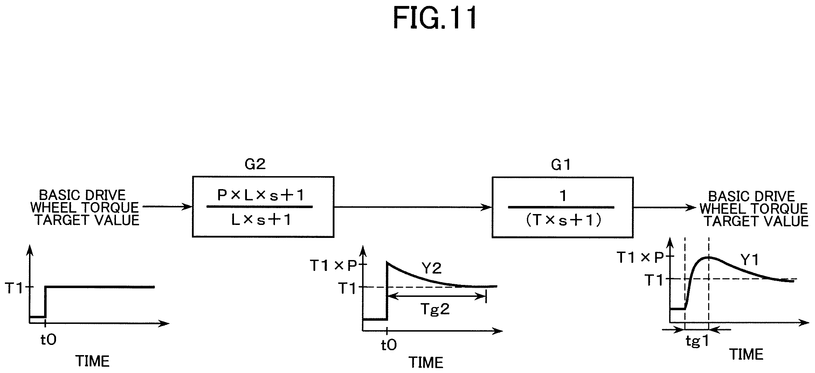

FIG. 11 is a block diagram illustrating an example of changes of the basic drive wheel torque target value and the final drive wheel torque target value based on the transfer function G(s). FIG. 11 illustrates the step response of the transfer function G(s) as an example. That is, in FIG. 11, the input (basic drive wheel torque target value) is a step function. A waveform Y2 is an output waveform based on the above-mentioned element G2(s). Further, a waveform Y1 is a waveform of the final drive wheel torque target value.

As represented by the waveform Y2, when the basic drive wheel torque target value rises up to T1 at time t0, the output of the element G2(s) rises up to T1×P at time t0. After time t0, the output of the element G2(s) gently decreases toward the basic drive wheel torque target value T1.

As represented by the waveform Y1, after time t0, the final drive wheel torque target value rises gentler than the output of the element G2(s). That is, the rising rate of the final drive wheel torque target value is smaller than the rising rate of the basic drive wheel torque target value. As represented by the waveform Y1, the final drive wheel torque target value reaches a peak value (T1×P) higher than the basic drive wheel torque target value with a lag of tg1 from time t0. After that, the basic drive wheel torque target value gently decreases toward the basic drive wheel torque target value T1.

Note that, a time period tg2 required for the value represented by the output waveform Y2 of the element G2(s) to match with the basic drive wheel torque target value T1 can be controlled by the time constant L of the transfer function G(s). That is, by adjusting the time constant L, the time period in which the acceleration feeling is maintained can be adjusted. Further, the ratio of the basic drive wheel torque target value with respect to the peak of the final drive wheel torque target value can be controlled by the proportional gain P of the transfer function G(s). Therefore, by adjusting the proportional gain P, the acceleration performance can be adjusted. Further, the lag time period tg1 required for the final drive wheel torque target value to reach the peak value (T1×P) can be controlled by the time constant T of the element G1(s).

The filter function is set based on the transfer function G(s) that achieves such a waveform. That is, the filter function is a function including P, T, and L described above as coefficients. Note that, T, L, and P may be changed based on the vehicle drive state. For example, at the time of gear change, the time constant T may be changed to a value smaller than a basic value. For example, the time constant T may be set based on the difference between the final target engine revolution speed and the current engine revolution speed so as to be reduced at the time of gear change. Further, the proportional gain P may be set based on the accelerator operation amount or the basic engine torque target value so that the gain P increases during acceleration.

As illustrated in FIG. 5, the drive force target correction unit 15C in this embodiment includes a correction condition determination unit 15d. The correction condition determination unit 15d determines whether or not the acceleration request from the user fulfills a condition (hereinafter referred to as "correction condition") for performing correction of the drive force target correction unit 15C (the above-mentioned calculation using the filter function). For example, the correction condition determination unit 15d determines whether or not the acceleration request is higher than the level set in advance based on the accelerator operation amount detected by the accelerator sensor 24. Specifically, the correction condition determination unit 15d determines whether or not the accelerator operation amount is higher than a threshold value defined in advance (hereinafter referred to as "first operation amount threshold value"). Further, the correction condition determination unit 15d determines whether or not the change rate of the accelerator operation amount is higher than a threshold value defined in advance (hereinafter referred to as "change rate threshold value"). The correction condition determination unit 15d determines that the acceleration request fulfills the correction condition when the accelerator operation amount is higher than the first operation amount threshold value and when the change rate of the accelerator operation amount is higher than the change rate threshold value.

The correction condition determination unit 15d determines that the acceleration request does not fulfill the correction condition when the acceleration request is smaller than the level set in advance. For example, the correction condition determination unit 15d determines whether or not the accelerator operation amount is smaller than a threshold value defined in advance (hereinafter referred to as "second operation amount threshold value"). Then, the correction condition determination unit 15d determines that the acceleration request does not fulfill the acceleration correction condition when the accelerator operation amount is smaller than the second operation amount threshold value.

When the comfortable drive mode is selected and the correction condition determination unit 15d determines that the acceleration request from the driver satisfies the correction condition, the drive force target correction unit 15C uses the above-mentioned filter function to calculate the final drive wheel torque target value . When the comfortable drive mode is not selected, the drive force target correction unit 15C calculates the basic drive wheel torque target value as the final drive wheel torque target value without using the filter function. Further, also when the acceleration request from the driver does not satisfy the correction condition, the drive force target correction unit 15C calculates the basic drive wheel torque target value as the final drive wheel torque target value without using the filter function.

With such processing of the drive force target correction unit 15C, the basic drive wheel torque target value changes as shown in FIG. 4 described above, for example. That is, time t1 of FIG. 4 is timing at which the accelerator operation amount increases and the correction condition is satisfied. Further, time t3 of FIG. 4 is timing at which the accelerator operation amount decreases and the correction condition is not satisfied. Prior to time t1 and after time t3, correction using the filter function is not performed, and hence the basic drive wheel torque target value and the final drive wheel torque target value match with each other. Between time t1 and time t3, the final drive wheel torque target value rises gentler than the basic drive wheel torque target value, and after reaching the peak value Tp2, gradually approaches the basic drive wheel torque target value. Further, the peak value Tp2 of the final drive wheel torque target value becomes larger than the peak value Tp1 of the basic drive wheel torque target value by a ratio corresponding to the proportional gain P.

Note that, the period in which the filter function is used is not limited to that described above. For example, the calculation using the filter function may be executed also in the normal mode or the fuel efficient mode. In this case, the time constants T and L and the proportional gain P may be set in accordance with the mode. Further, the correction using the filter function may be performed also during deceleration. In this case, the proportional gain P may be smaller than 1. Further, when low speed running continues, such as when the vehicle runs in an urban area, the proportional gain P may be smaller than 1.

The target throttle opening degree calculation unit 18 calculates the target throttle opening degree based on the final drive wheel torque target value. The drive force target calculation unit 15 in this embodiment includes the reverse conversion unit 15D as described above. The reverse conversion unit 15D converts the final drive wheel torque target value into an engine torque target value (final engine torque target value) to be used in the target throttle opening degree calculation unit 18. In this embodiment, the final engine torque target value is the targeted engine torque. The target throttle opening degree calculation unit 18 calculates the target throttle opening degree based on the final engine torque target value.

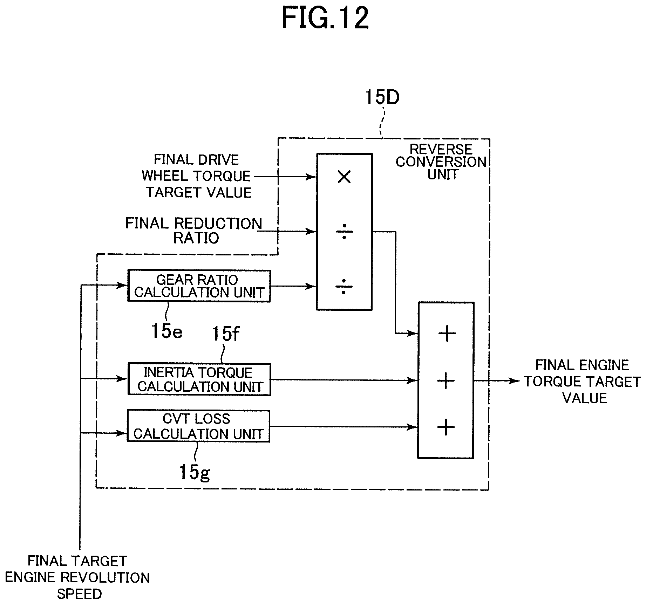

The reverse conversion unit 15D converts the final drive wheel torque target value into the final engine torque target value based on the final target engine revolution speed. FIG. 12 is a block diagram illustrating the function of the reverse conversion unit 15D. As illustrated in FIG. 12, the reverse conversion unit 15D includes, similarly to the conversion unit 15B, an inertia torque calculation unit 15f and a CVT loss calculation unit 15g.

The reverse conversion unit 15D performs calculation reverse to that in the conversion unit 15B, to thereby calculate the final engine torque target value based on the final drive wheel torque target value. Specifically, the reverse conversion unit 15D first calculates, based on the gear ratio of the CVT 5 and the final reduction ratio, a target value of the torque on the upstream with respect to the CVT 5 from the final drive wheel torque target value. For example, the reverse conversion unit 15D divides the final drive wheel torque target value by the gear ratio of the CVT 5 and the final reduction ratio, and sets the result as the target value of the torque on the upstream with respect to the CVT 5. The gear ratio used in the division of the reverse conversion unit 15D is, for example, a gear ratio calculated based on the final target engine revolution speed and the vehicle speed. That is, the gear ratio is, for example, a gear ratio equal to the gear ratio calculated by the target gear ratio calculation unit 13.

The inertia torque calculation unit 15f calculates, similarly to the inertia torque calculation unit 15a, the inertia torque of the engine 4, which is generated due to the change of the engine revolution speed. The inertia torque calculation unit 15f in this embodiment calculates the inertia torque based on the final target engine revolution speed. Specifically, the inertia torque calculation unit 15f calculates the inertia torque based on the change rate of the final target engine revolution speed and the moment of inertia of the mechanism (crankshaft and piston) on the upstream side with respect to the CVT 5 (inertia torque = moment of inertia × change rate of final target engine revolution speed) . The method of calculating the inertia torque is not limited thereto. For example, the inertia torque calculation unit 15f may calculate the inertia torque based on the change rate of the gear ratio similarly to the inertia torque calculation unit 15a.

The CVT loss calculation unit 15g calculates, similarly to the CVT loss calculation unit 15b, the CVT loss based on, for example, the final target engine revolution speed, the speed of revolutions of the output shaft detected by the output shaft revolution speed sensor 26, and torque transmitted through the CVT 5 (torque output from the engine 4).

The reverse conversion unit 15D calculates the final engine torque target value based on the target value of the torque of the mechanism on the upstream side with respect to the CVT 5, which is obtained through the division described above, the inertia torque calculated by the inertia torque calculation unit 15f, and the CVT loss calculated by the CVT loss calculation unit 15g. Specifically, the reverse conversion unit 15D adds the inertia torque calculated by the inertia torque calculation unit 15f and the CVT loss calculated by the CVT loss calculation unit 15g to the target value of the torque of the mechanism on the upstream side with respect to the CVT 5, and sets the result as the final engine torque target value.

The target throttle opening degree calculation unit 18 calculates the target throttle opening degree based on the final engine torque target value and the final target engine revolution speed. For example, the processing of the target throttle opening degree calculation unit 18 is executed as follows.

The memory 10c stores in advance second output characteristic information defined by the output characteristics of the engine 4. The second output characteristic information is, similarly to the first output characteristic information, for example, information representing a relationship among the throttle opening degree, the engine revolution speed, and the engine torque. In the embodiment described here, the memory 10c stores a map that associates the throttle opening degree, the engine revolution speed, and the engine torque with each other (this map is hereinafter referred to as "second engine torque map"). The target throttle opening degree calculation unit 18 refers to the second engine torque map to calculate the throttle opening degree corresponding to the final engine torque target value and the final target engine revolution speed, and sets the throttle opening degree as the target throttle opening degree. Note that, the final engine torque target value in this embodiment is an ultimate target value for the engine torque. When the final engine torque target value is a target value for the engine output, the second output characteristic information may be a map or a relational expression that associates the throttle opening degree, the engine revolution speed, and the engine output with each other.

The above-mentioned functional units of the control device 10 operate as follows in the respective three control modes.

First, the normal mode is described. As described above, in the normal mode, the correction by the revolution speed correction unit 11B is not executed. Therefore, the basic target engine revolution speed calculated by the basic revolution speed calculation unit 11A is set as the final target engine revolution speed. With reference to FIG. 3, the basic revolution speed calculation unit 11A calculates the engine revolution speed N1 corresponding to the accelerator operation amount as the basic target engine revolution speed. This engine revolution speed N1 is set as the final target engine revolution speed. The target gear ratio calculation unit 13 calculates the target gear ratio based on the final target engine revolution speed. Further, in the embodiment described here, the correction using the filter function by the drive force target correction unit 15C is also not executed in the normal mode. Therefore, the basic engine torque target value calculated by the basic engine torque target calculation unit 15A is equal to the final engine torque target value calculated by the reverse conversion unit 15D. As a result, the target throttle opening degree calculated by the target throttle opening degree calculation unit 18 matches with the basic throttle opening degree calculated by the angle conversion unit 14. With reference to FIG. 3, the throttle opening degree Th1 is set as the target throttle opening degree.

Next, with reference to FIG. 3, the fuel efficient mode is described. The basic revolution speed calculation unit 11A calculates, similarly to the case of the normal mode, the basic target engine revolution speed N1 based on the accelerator operation amount. The revolution speed correction unit 11Bcorrects the target engine revolution speed from the basic target engine revolution speed N1 so as to be close to the engine revolution speed N3 at the drive point on the best fuel efficiency curve A, and sets the speed of revolutions obtained as a result (N2 in FIG. 3) as the final target engine revolution speed. The target gear ratio calculation unit 13 calculates the target gear ratio based on the final target engine revolution speed N2. On the other hand, the drive force target calculation unit 15 calculates the rear wheel torque at the drive point P1 of the basic target engine revolution speed N1 (basic drive wheel torque target value) through the processing by the basic engine torque target calculation unit 15A and the conversion unit 15B. In the fuel efficient mode, the correction of the drive wheel torque target value by the drive force target correction unit 15C is not executed. Therefore, the target throttle opening degree calculation unit 18 calculates the target throttle opening degree based on the final drive wheel torque target value, which is equal to the basic drive wheel torque target value (more specifically, the final engine torque target value calculated by the reverse conversion unit 15D), and the final target engine revolution speed. In other words, the target throttle opening degree calculation unit 18 can obtain the rear wheel torque equal to the rear wheel torque at the drive point P1, and sets the throttle opening degree (Th2 in FIG. 3) at the drive point P2 at which the engine revolution speed becomes the final target engine revolution speed as the target throttle opening degree.

Finally, the comfortable drive mode is described. In the comfortable drive mode, the correction by the revolution speed correction unit 11B is not executed. Therefore, the basic target engine revolution speed N1 calculated by the basic revolution speed calculation unit 11A is set as the final target engine revolution speed. The target gear ratio calculation unit 13 calculates the target gear ratio based on the final target engine revolution speed. On the other hand, the drive force target calculation unit 15 calculates the rear wheel torque (basic drive wheel torque target value) at the drive point P1 of the basic throttle opening degree (Th1 in FIG. 3) and the basic target engine revolution speed N1 through the processing by the basic engine torque target calculation unit 15A and the conversion unit 15B. The drive force target correction unit 15C uses the filter function to calculate the final drive wheel torque target value based on the basic drive wheel torque target value. The target throttle opening degree calculation unit 18 calculates the target throttle opening degree based on the final target engine revolution speed and the final engine torque target value obtained based on the final drive wheel torque target value through the processing by the reverse conversion unit 15D.

As described above, the processing of the control device 10 is repeatedly executed at a cycle set in advance. Therefore, the basic drive wheel torque target value gradually changes over time, and the final drive wheel torque target value also changes along therewith. As shown in FIG. 4, when the acceleration request from the driver satisfies the correction condition, the final drive wheel torque target value changes gentler than the basic drive wheel torque target value. When the final drive wheel torque target value changes over time, the target throttle opening degree calculation unit 18 calculates the target throttle opening degree based on the final drive wheel torque target value and the final target engine revolution speed obtained at each time point. With this, the target throttle opening degree changes in synchronization with the final drive wheel torque target value.

As described above, the memory 10c stores the first engine torque map and the second engine torque map as the output characteristic information. The throttle opening degree, the engine revolution speed, and the engine torque set in the first engine torque map may be stored as values suitable for obtaining a comfortable ride instead of values defined by the actual output characteristics of the engine 4. On the other hand, the throttle opening degree, the engine revolution speed, and the engine torque set in the second engine torque map may be closer to the actual output characteristics of the engine 4 as compared to the case of the first engine torque map.

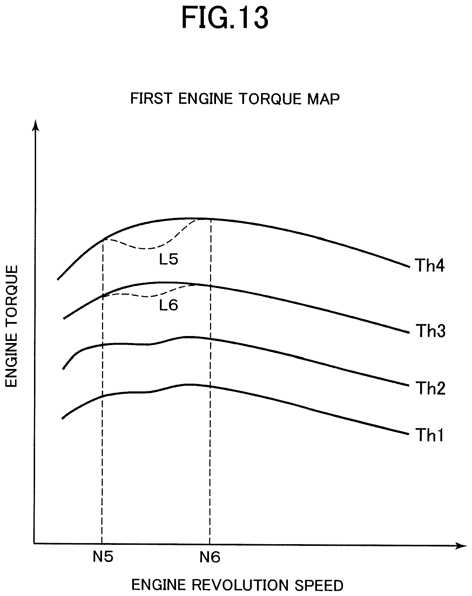

FIG. 13 is a graph showing an example of the first engine torque map in such a mode. As shown in FIG. 13, for example, the actual output characteristics of the engine 4 (broken lines L5 and L6) each have a valley of the engine torque between engine revolution speeds N5 and N6. The engine torque defined by the first engine torque map is deviated from this valley, and gently rises between the engine revolution speeds N5 and N6. On the other hand, the throttle opening degree, the engine revolution speed, and the engine torque set in the second engine torque map are values defined by the actual output characteristics of the engine 4. That is, the engine torque defined by the second engine torque map has a valley between the engine revolution speeds N5 and N6.

With such a difference between those two engine torque maps, a comfortable ride can be achieved without depending on the actual output characteristics of the engine 4. For example, when the engine 4 is driven at an engine revolution speed corresponding to the valley of the engine torque, the basic engine torque target value calculated with reference to the first engine torque map takes a value higher than the engine torque defined by the actual output characteristics of the engine 4. The final engine torque target value is calculated based on this higher basic engine torque target value. Then, the target throttle opening degree is set so that the torque of the final engine torque target value can be obtained. Therefore, with such a difference between those two engine torque maps, output characteristics having more desirable torque curves as compared to the torque curves defined by the actual output characteristics of the engine 4 may be achieved.

As described above, the conversion unit 15B uses the inertia torque calculated by the inertia torque calculation unit 15a to calculate the basic drive wheel torque target value based on the basic engine torque target value. Further, the reverse conversion unit 15D uses the inertia torque calculated by the inertia torque calculation unit 15f to calculate the final engine torque target value based on the final drive wheel torque target value. However, the conversion unit 15B may calculate the basic drive wheel torque target value based on the basic engine torque target value without using the inertia torque . Then, the reverse conversion unit 15D may calculate, similarly to the example of FIG. 12, the final engine torque target value based on the final drive wheel torque target value and the inertia torque.

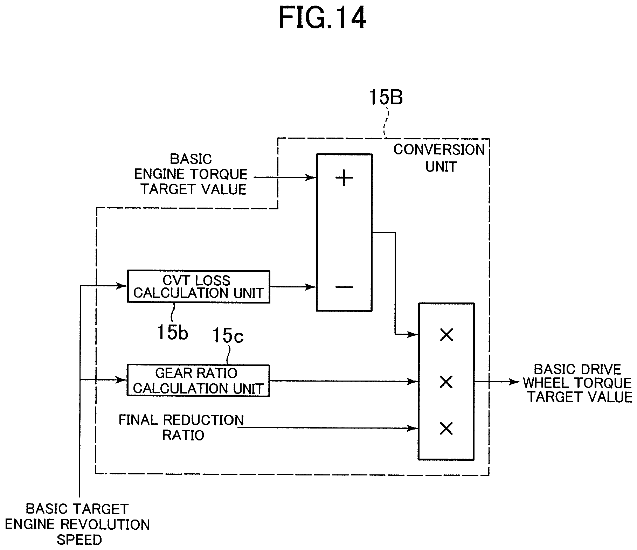

FIG. 14 is a block diagram illustrating the processing of the conversion unit 15B according to this mode. As illustrated in FIG. 14, the conversion unit 15B of this mode includes the CVT loss calculation unit 15b and the gear ratio calculation unit 15c, but does not include the inertia torque calculation unit 15a. Therefore, when the basic drive wheel torque target value is calculated based on the basic engine torque target value, the inertia torque is not subtracted. On the other hand, in the processing of the reverse conversion unit 15D, as illustrated in FIG. 12, when the final engine torque target value is calculated, the inertia torque is added. With this, during acceleration of the vehicle, engine torque that compensates for the torque loss due to the variation of the engine revolution speed can be obtained, and thus the vehicle acceleration performance can be improved.

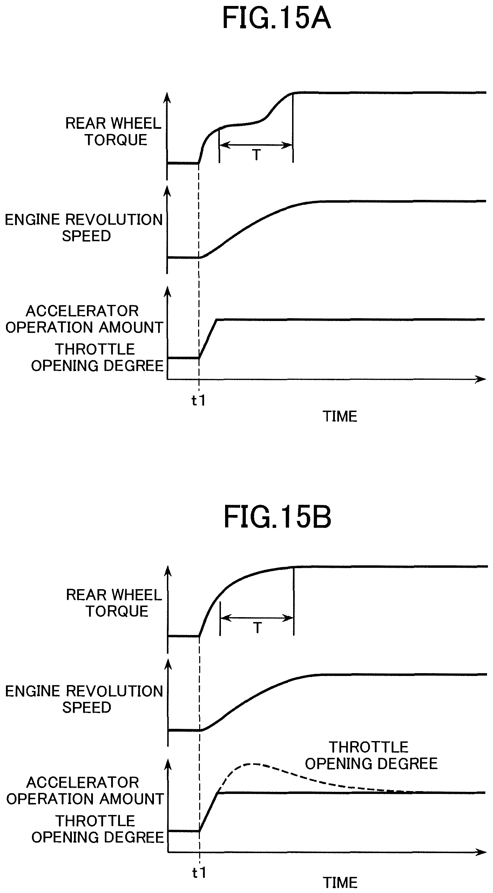

FIGS. 15A to 15B are time charts showing the effect of the mode in which the inertia torque is used only in the reverse conversion unit 15D as described above. FIG. 15A is a time chart of a mode in which both the conversion unit 15B and the reverse conversion unit 15D use the inertia torque, and FIG. 15B is a time chart of the mode in which only the reverse conversion unit 15D uses the inertia torque. FIGS. 15A and 15B show the changes of the accelerator operation amount, the throttle opening degree, the engine revolution speed, and the rear wheel torque.

In FIG. 15A, the accelerator operation amount increases at time t1. The throttle opening degree also increases along therewith. In this example, the throttle opening degree changes similarly to the accelerator operation amount. The engine revolution speed starts to rise at time t1 due to the increase of the throttle opening degree. The rear wheel torque starts to rise at time t1 due to the increase of the throttle opening degree. However, part of torque of the engine 4 is consumed for raising the engine revolution speed, and hence the rising of the rear wheel torque is inhibited during a period T.

Also in FIG. 15B, similarly to FIG. 15A, the accelerator operation amount increases at time t1, and the throttle opening degree also increases along therewith. The engine revolution speed starts to rise at time t1 due to the increase of the throttle opening degree. In the mode in which the inertia torque is used only in the processing of the reverse conversion unit 15D, the target throttle opening degree is set so as to compensate for the torque (inertia torque) consumed for raising the engine revolution speed. Therefore, as shown in FIG. 15B, during the period in which the engine revolution speed rises, the throttle opening degree rises larger than the accelerator operation amount. As a result, the rising of the rear wheel torque is not inhibited even in the period in which the engine revolution speed rises. As a result, the vehicle acceleration performance is improved.

As described above, the memory 10c stores the engine revolution speed map that associates the accelerator operation amount with the engine revolution speed. The target engine revolution speed calculation unit 11 refers to the engine revolution speed map to calculate, as the target engine revolution speed, the engine revolution speed corresponding to the accelerator operation amount detected by the accelerator sensor 14, and the target gear ratio calculation unit 13 calculates the target gear ratio based on the target engine revolution speed. Further, the drive force target calculation unit 15 calculates, based on the target engine revolution speed, the drive force target value (engine torque target value and drive wheel torque target value) that is the target value relating to the drive force of the vehicle, and the target throttle opening degree calculation unit 18 calculates the target throttle opening degree based on the drive force target value. With this, the target gear ratio and the target throttle opening degree are calculated based on the target engine revolution speed corresponding to the accelerator operation amount, and hence the engine revolution speed is easily set to the speed of revolutions that is adapted to the accelerator operation of the driver and can achieve a comfortable ride.

The target engine revolution speed calculation unit 11 calculates, as the target engine revolution speed, an engine revolution speed higher than the engine revolution speed for achieving the best fuel efficiency. With this, the vehicle acceleration response can be improved.

The drive force target calculation unit 15 calculates the basic drive force target value based on the target engine revolution speed, corrects the basic drive force target value, and calculates the value obtained through the correction as the final drive force target value. The target throttle opening degree calculation unit 18 calculates the target throttle opening degree based on the final drive force target value. With this, the drive force target value can be corrected as necessary, and thus the vehicle acceleration performance can be improved.

The drive force target calculation unit 15 uses the filter function to calculate the final drive force target value based on the basic drive force target value. With this, the relative change of the final drive force target value with respect to the basic drive force target value can be desirably set.

The filter function is defined so that the rising rate of the final drive force target value is smaller than the rising rate of the basic drive force target value. With this, smooth acceleration and/or deceleration can be achieved.

The filter function is defined so that, when the basic drive force target value rises, the final drive force target value rises up to a value higher than the basic drive force target value, and then decreases toward the basic drive force target value. With this, the acceleration performance can be improved, and the acceleration feeling can be maintained.

The transfer function of the filter function includes the first-order lag element. With this, smooth acceleration and/or deceleration can be achieved.

The transfer function of the filter function includes the proportional element. With this, the acceleration performance can be improved.

The drive force target calculation unit 15 calculates the engine torque target value based on the target engine revolution speed, and calculates the drive wheel torque target value based on the engine torque target value and the inertia torque generated due to the change of the engine revolution speed. Then, the target throttle opening degree calculation unit 18 calculates the target throttle opening degree based on the drive wheel torque target value . With this, it is possible to set the target throttle opening degree that compensates for the loss of the drive force due to the generation of the inertia torque.

The target engine revolution speed calculation unit 11 calculates, as the basic target engine revolution speed, the engine revolution speed corresponding to the accelerator operation amount detected by the accelerator sensor 24, and the revolution speed correction unit 11B corrects the basic target engine revolution speed to calculate the speed of revolutions obtained through the correction as the final target engine revolution speed. The target gear ratio calculation unit 13 calculates the target gear ratio so that the actual engine revolution speed becomes the final target engine revolution speed. Further, the drive force target calculation unit 15 calculates, based on the basic target engine revolution speed, the drive force target value (engine torque target value and rear wheel torque target value) that is the target value relating to the drive force of the vehicle, and the target throttle opening degree calculation unit 18 calculates the target throttle opening degree based on the drive force target value that is based on the basic target engine revolution speed.

With such a control, the drive force target value and the target throttle opening degree are calculated based on the basic target engine revolution speed corresponding to the accelerator operation amount. Therefore, the engine revolution speed is easily set to the speed of revolutions that is adapted to the accelerator operation of the driver and can achieve a comfortable ride. Further, the drive force target value is calculated based on the basic target engine revolution speed, and the target throttle opening degree is calculated based on the final target engine revolution speed and the drive force target value that is based on the basic target engine revolution speed. Therefore, even when the final target engine revolution speed is a value obtained by correcting the basic target engine revolution speed, the target throttle opening degree can be set so as to maintain the drive force of the vehicle.

The drive force target calculation unit 15 refers to the first engine torque map as the output characteristic information to calculate the drive force target value based on the basic target engine revolution speed and the basic throttle opening degree converted based on the detected accelerator operation value. The target throttle opening degree calculation unit 18 refers to the second engine torque map as the output characteristic information to calculate the target throttle opening degree based on the drive force target value and the final target engine revolution speed. With this, an appropriate target throttle opening degree is easily calculated.

The memory 10c stores, as the output characteristic information, the first engine torque map and the second engine torque map that is different from the first engine torque map. In particular, the relationship among the throttle opening degree, the engine revolution speed, and the engine torque, which is defined by the second engine torque map, is closer to the actual output characteristics of the engine as compared to the case of the first engine torque map. With this, by using the difference between the first engine torque map and the second engine torque map, more desirable output characteristics as compared to the actual output characteristics of the engine 4 can be achieved.

The target throttle opening degree calculation unit 18 calculates the target throttle opening degree based on the drive force target value and the inertia torque of the engine 4 generated due to the change of the engine revolution speed. With this, it is possible to set the target throttle opening degree that compensates for the loss of the drive force due to the generation of the inertia torque.

The drive force target calculation unit 15 calculates, as the drive force target value, the engine torque target value that is the target value relating to the engine torque and the drive wheel torque target value that is the target value relating to the torque of the rear wheel 8. The drive force target correction unit 15C corrects the basic drive wheel torque target value, and calculates the target value obtained through the correction as the final drive wheel torque target value. The target throttle opening degree calculation unit 18 calculates the target throttle opening degree based on the final engine torque target value that is based on the final drive wheel torque target value. With this, as compared to the case where the target value for the engine torque is corrected, correction desired in terms of the ride comfort is possible.

According to one mode of the present invention, the conversion unit 15B calculates the basic drive wheel torque target value based on the basic engine torque target value without using the inertia torque, and the reverse conversion unit 15D calculates the final engine torque target value based on the final drive wheel torque target value and the inertia torque. With this, it is possible to set the target throttle opening degree that compensates for the loss of the drive force due to the generation of the inertia torque.

Note that, the present **teaching** is not limited to the control by the control device 10 described above, and various modifications can be made thereto.

For example, a map that associates the throttle opening degree, the engine revolution speed, and the engine output with each other may be used as the output characteristic information instead of the first engine torque map and the second engine torque map.

Further, when the final engine torque target value is calculated, the CVT loss may not necessarily be used.

Further, in the embodiment described above, the basic drive wheel torque target value is calculated based on the basic engine torque target value. However, the basic engine torque target value may be corrected, and the value obtained through the correction may be set as the final engine torque target value.

In the above description, the target engine revolution speed obtained by correcting the basic target engine revolution speed is referred to as the final target engine revolution speed. However, the term "final" does not necessarily exclude the case where the target engine revolution speed obtained by correcting the basic target engine revolution speed is further corrected.

Now, modified examples of the above-mentioned embodiment are described. In the above-mentioned embodiment, as illustrated in FIG. 5, the basic engine torque target calculation unit 15A, the conversion unit 15B, the drive force target correction unit 15C, and the reverse conversion unit 15D perform a series of calculation to calculate the final engine torque target value, and the target throttle opening degree calculation unit 18 calculates the target throttle opening degree based on this final engine torque target value. By the way, when such a series of calculation is performed, the target throttle opening degree calculated by the target throttle opening degree calculation unit 18 may be unstable, and a periodic variation may occur. In view of this, in the respective modified examples described below, under predetermined conditions, a target throttle opening degree different from the target throttle opening degree calculated based on the final engine torque target value is used, to thereby stabilize the target throttle opening degree as necessary.

### [First Modified Example]

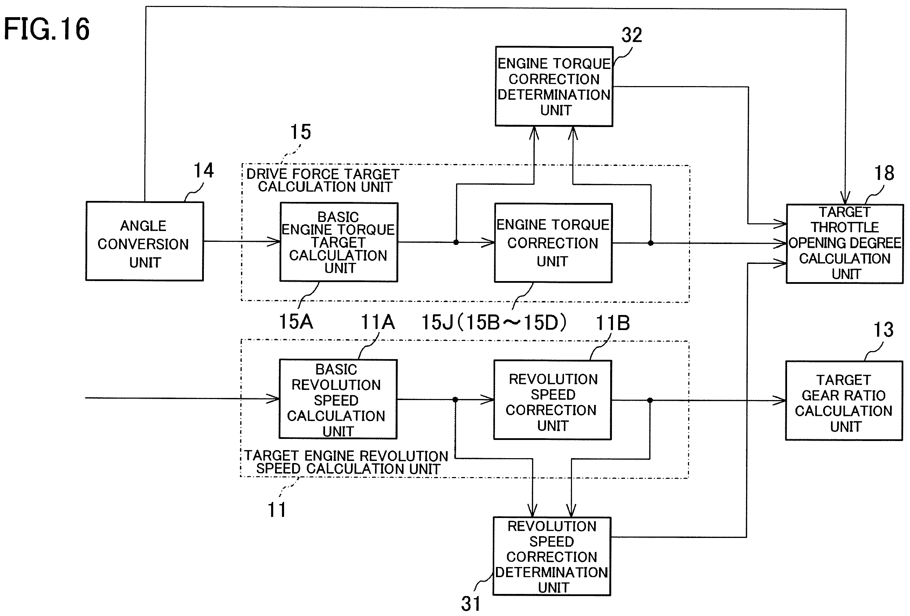

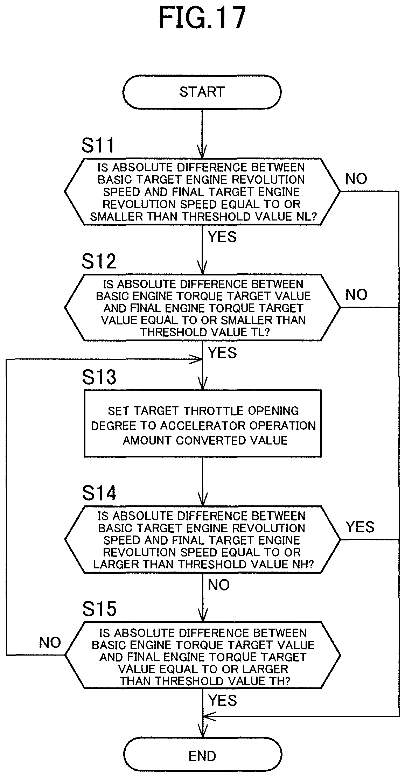

FIGS. 16 and 17 are a block diagram and a flow chart illustrating the function and the operation of the control device 10 according to a first modified example. Detailed description of configurations that overlap with the configurations of the above-mentioned embodiment is omitted, and the configurations are denoted by the same reference symbols. The control device 10 of this example includes a revolution speed correction determination unit 31 and an engine torque correction determination unit 32 in addition to the respective units illustrated in FIG. 5 described above. Note that, an engine torque correction unit 15J includes the conversion unit 15B, the drive force target correction unit 15C, and the reverse conversion unit 15D illustrated in FIG. 5 described above.

The revolution speed correction determination unit 31 acquires the basic target engine revolution speed input to the revolution speed correction unit 11B (uncorrected target engine revolution speed) and the final target engine revolution speed output from the revolution speed correction unit 11B (corrected target engine revolution speed). The revolution speed correction determination unit 31 determines whether or not the absolute difference between the acquired basic target engine revolution speed and the acquired final target engine revolution speed is equal to or smaller than a threshold value NL (S11 in the flow chart) . With this, it is determined whether or not the revolution speed correction unit 11B corrects the basic target engine revolution speed.

The engine torque correction determination unit 32 acquires the basic engine torque target value input to the engine torque correction unit 15J (uncorrected target engine torque) and the final engine torque target value output from the engine torque correction unit 15J (corrected target engine torque). The engine torque correction determination unit 32 determines whether or not the absolute difference between the acquired basic engine torque target value and the acquired final engine torque target value is equal to or smaller than a threshold value TL (S12 in the flow chart) . With this, it is determined whether or not the engine torque correction unit 15J corrects the basic engine torque target value.

Note that, the engine torque correction determination unit 32 may acquire the basic drive wheel torque target value input to the drive force target correction unit 15C illustrated in FIG. 5 described above and the final drive wheel torque target value output from the drive force target correction unit 15C, and determine whether or not the absolute difference therebetween is equal to or smaller than a threshold value.

Note that, the case where the conditions of Steps S11 and S12 in the flow chart are satisfied is mainly the case where the control device 10 executes the "normal mode" . Further, the case where the conditions are satisfied also includes the case where the control device 10 executes the "fuel efficient mode", and the correction amount of the basic target engine revolution speed by the revolution speed correction unit 11B is sufficiently small. Further, the case where the conditions are satisfied also includes the case where the control device 10 executes the "comfortable drive mode", and the correction amount of the basic engine torque target value by the engine torque correction unit 15J is sufficiently small.

When the conditions of Steps S11 and S12 in the flow chart are satisfied, the target throttle opening degree calculation unit 18 sets an accelerator operation amount converted value input from the angle conversion unit 14 as the target throttle opening degree without using the final engine torque target value input from the drive force target calculation unit 15 (S13 in the flow chart) . The accelerator operation amount converted value is a value obtained by converting the accelerator operation amount into the throttle opening degree by using a map or a relational expression in which the accelerator operation amount and the throttle opening degree have a one-to-one relationship (for example, proportional relationship) therebetween.

Note that, when the revolution speed correction determination unit 31 determines that the absolute difference between the basic target engine revolution speed and the final target engine revolution speed is equal to or larger than a threshold value NH (S14: YES), or when the engine torque correction determination unit 32 determines that the absolute difference between the basic engine torque target value and the final engine torque target value is equal to or larger than a threshold value TH (S15: YES), the target throttle opening degree calculation unit 18 ends the use of the accelerator operation amount converted value. With this, the target throttle opening degree calculation unit 18 returns to the processing of calculating the target throttle opening degree based on the final engine torque target value input from the drive force target calculation unit 15.

In the first modified example described above, when the revolution speed correction unit 11B and the engine torque correction unit 15J are not operated (mainly when the control device 10 executes the "normal mode"), the accelerator operation amount converted value is used as the target throttle opening degree. In this manner, the target throttle opening degree can be stabilized, and the processing load can be reduced.

### [Second Modified Example]

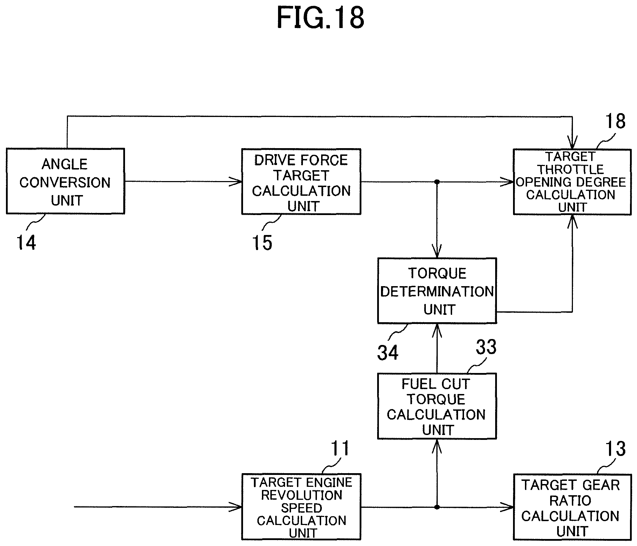

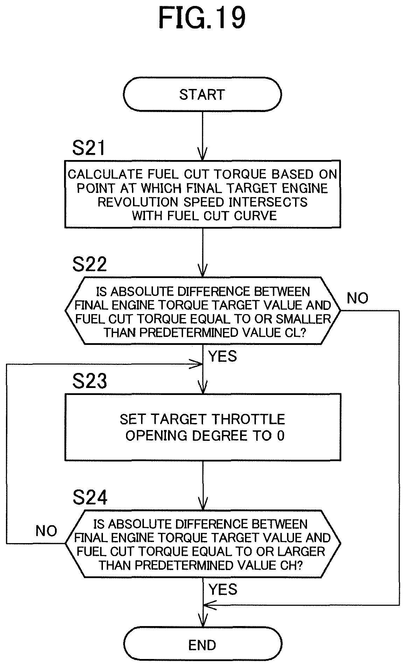

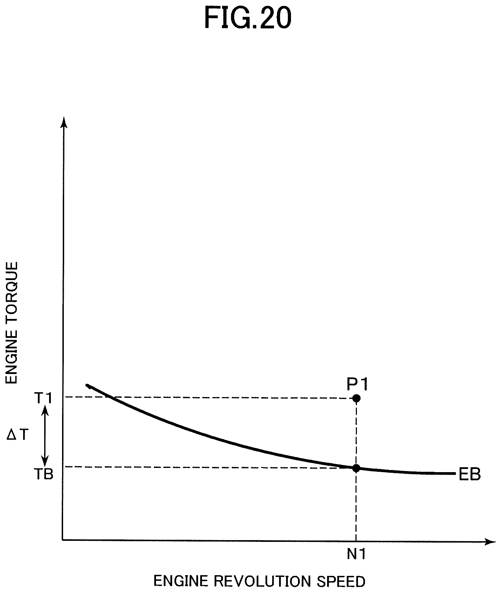

FIGS. 18 and 19 are a block diagram and a flow chart illustrating the function and the operation of the control device 10 according to a second modified example. Detailed description of configurations that overlap with the configurations of the above-mentioned embodiment is omitted, and the configurations are denoted by the same reference symbols. FIG. 20 is a graph showing the function and the operation of the control device 10 according to the second modified example. The control device 10 of this example includes a fuel cut torque calculation unit 33 and a torque determination unit 34 in addition to the respective units illustrated in FIG. 5 described above.

The fuel cut torque calculation unit 33 acquires the final target engine revolution speed output from the target engine revolution speed calculation unit 11, and calculates fuel cut torque generated when the fuel supply to the engine 4 is interrupted at the final target engine revolution speed (S21 in the flow chart). The torque determination unit 34 determines whether or not the absolute difference between the final engine torque target value output from the drive force target calculation unit 15 and the fuel cut torque output from the fuel cut torque calculation unit 33 is equal to or smaller than a threshold value CL (S22 in the flow chart) . Note that, the case where the condition of Step S22 in the flow chart is satisfied is a case where, for example, the driver performs an operation of closing the accelerator for deceleration, and the engine torque decreases along therewith to approach the fuel cut torque.

FIG. 20 is a graph showing the processing of Steps S21 and S22 in the flow chart. In FIG. 20, the horizontal axis represents an engine revolution speed, and the vertical axis represents engine torque. Further, EB represents a fuel cut curve, P1 represents a current drive point, N1 represents a final target engine revolution speed, and T1 represents a final engine torque target value. The map or relational expression representing the fuel cut curve EB is stored in the memory 10c. In Step S21, the fuel cut torque calculation unit 33 determines the fuel cut torque TB at the final target engine revolution speed N1 based on the intersection between the final target engine revolution speed N1 and the fuel cut curve EB. In Step S22, the torque determination unit 34 determines whether or not an absolute difference ΔT between the final engine torque target value T1 and the fuel cut torque TB is equal to or smaller than the threshold value CL.

When the condition of Step S22 in the flow chart is satisfied, the target throttle opening degree calculation unit 18 sets the target throttle opening degree to 0 without using the final engine torque target value input from the drive force target calculation unit 15 (S23 in the flow chart). Note that, when the torque determination unit 34 determines that the absolute difference between the final engine torque target value and the fuel cut torque is equal to or larger than a threshold value CH (S24: YES), the target throttle opening degree calculation unit 18 ends to set the throttle opening degree to 0. With this, the target throttle opening degree calculation unit 18 returns to the processing of calculating the target throttle opening degree based on the final engine torque target value input from the drive force target calculation unit 15.

In the second modified example described above, the target throttle opening degree is forcibly set to 0 when the final engine torque target value approaches the fuel cut torque. In this manner, the target throttle opening degree can be stabilized, and the fuel consumption can be reduced.

### [Third Modified Example]

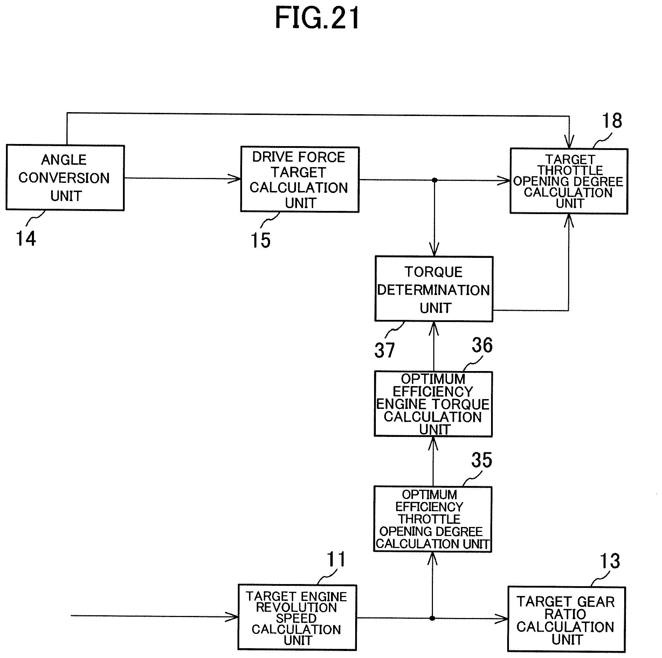

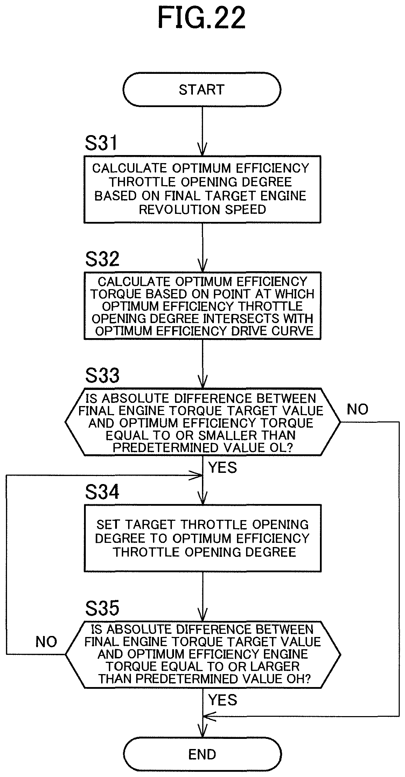

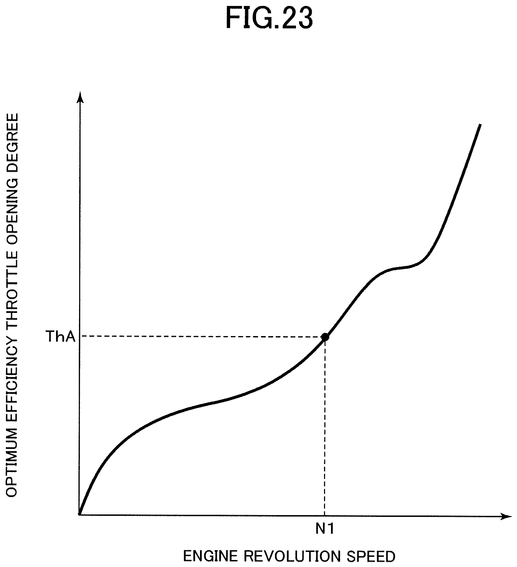

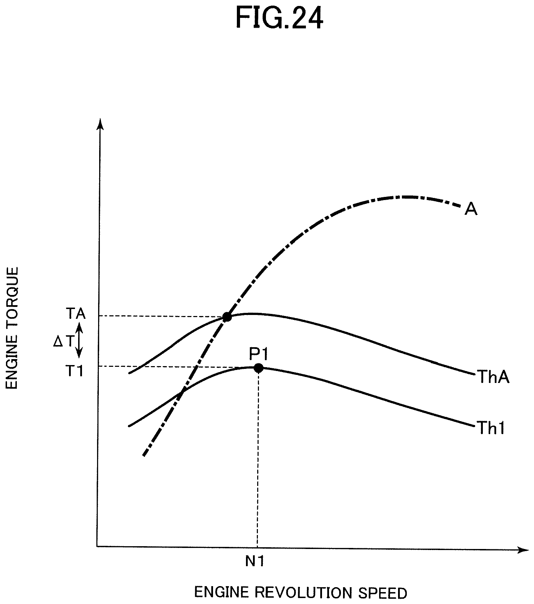

FIGS. 21 and 22 are a block diagram and a flow chart illustrating the function and the operation of the control device 10 according to a third modified example. Detailed description of configurations that overlap with the configurations of the above-mentioned embodiment is omitted, and the configurations are denoted by the same reference symbols. FIGS. 23 and 24 are graphs showing the function and the operation of the control device 10 according to the third modified example. The control device 10 of this example includes an optimum efficiency throttle opening degree calculation unit 35, an optimum efficiency engine torque calculation unit 36, and a torque determination unit 37 in addition to the respective units illustrated in FIG. 5 described above.

The optimum efficiency throttle opening degree calculation unit 35 acquires the final target engine revolution speed output from the target engine revolution speed calculation unit 11, and calculates the optimum efficiency throttle opening degree for achieving the best fuel efficiency at the final target engine revolution speed (S31 in the flow chart) . FIG. 23 is a graph showing the processing in Step S31 in the flow chart. In FIG. 23, the horizontal axis represents an engine revolution speed, and the vertical axis represents an optimum efficiency throttle opening degree. The map or relational expression representing the relationship between the engine revolution speed and the optimum efficiency throttle opening degree is stored in the memory 10c. In Step S31, the optimum efficiency throttle opening degree calculation unit 35 determines an optimum efficiency throttle opening degree ThA corresponding to the final target engine revolution speed N1.

The optimum efficiency engine torque calculation unit 36 acquires the optimum efficiency throttle opening degree output from the optimum efficiency throttle opening degree calculation unit 35, and calculates the optimum efficiency engine torque for achieving the best fuel efficiency based on the optimum efficiency throttle opening degree (S32 in the flow chart). The torque determination unit 37 determines whether or not the absolute difference between the final engine torque target value output from the drive force target calculation unit 15 and the optimum efficiency engine torque output from the optimum efficiency engine torque calculation unit 36 is equal to or smaller than a threshold value OL (S33 in the flow chart).

FIG. 24 is a graph showing the processing of Steps S32 and S33 in the flow chart. In FIG. 24, the horizontal axis represents an engine revolution speed, and the vertical axis represents engine torque. Further, the two solid-line curves are torque curves when the throttle opening degrees are Th1 and ThA, respectively. Further, A represents a best fuel efficiency curve, P1 represents a current drive point, N1 represents a final target engine revolution speed, and T1 represents a final engine torque target value. A map or relational expression representing the torque curves of the respective throttle opening degrees and the best fuel efficiency curve A is stored in the memory 10c. In Step S32, the optimum efficiency engine torque calculation unit 36 determines an optimum efficiency engine torque TA based on the intersection between the torque curve of the optimum efficiency throttle opening degree ThA and the best fuel efficiency curve A. In Step S33, the torque determination unit 37 determines whether or not an absolute difference ΔT between the optimum efficiency engine torque TA and the final engine torque target value T1 is equal to or smaller than the threshold value OL.

When the condition of Step S33 in the flow chart is satisfied, the target throttle opening degree calculation unit 18 sets the target throttle opening degree to the optimum efficiency throttle opening degree ThA without using the final engine torque target value input from the drive force target calculation unit 15 (S34 in the flow chart) . Note that, when the torque determination unit 37 determines that the absolute difference between the final engine torque target value and the optimum efficiency engine torque is equal to or larger than a threshold value OH (S35: YES), the target throttle opening degree calculation unit 18 ends the use of the optimum efficiency throttle opening degree ThA. With this, the target throttle opening degree calculation unit 18 returns to the processing of calculating the target throttle opening degree based on the final engine torque target value input from the drive force target calculation unit 15.

In the third modified example described above, the target throttle opening degree is forcibly set to the optimum efficiency throttle opening degree ThA when the final engine torque target value approaches the optimum efficiency engine torque. In this manner, the target throttle opening degree can be stabilized, and the fuel consumption can be reduced.

Description has been made of the first to third modified examples, but the present **teaching** is not limited to those modified examples. For example, when the driver performs a switch operation or the like, the target throttle opening degree calculation unit 18 may set the accelerator operation amount converted value input from the angle conversion unit 14 as the target throttle opening degree without using the final engine torque target value input from the drive force target calculation unit 15.

## Claims

1. A vehicle control device (10) for controlling a gear ratio of a continuously variable transmission (5) and a throttle opening degree, the vehicle control device (10) comprising:
a target engine revolution speed calculation unit (11) being configured to calculate a target engine revolution speed;
a target gear ratio calculation unit (13) being configured to calculate a target gear ratio based on the target engine revolution speed;
a target engine torque calculation unit (15) being configured to calculate a target engine torque based on an accelerator operation amount and the target engine revolution speed; and
a target throttle opening degree calculation unit (18) being configured to calculate a target throttle opening degree based on the target engine revolution speed and the target engine torque,
the target throttle opening degree calculation unit (18) being configured to output a target throttle opening degree instead of the calculated target throttle opening degree under a predetermined condition, wherein said output target throttle opening degree is different from the calculated target throttle opening degree.

2. The vehicle control device (10) according to claim 1, wherein the target throttle opening degree calculation unit (18) is configured to output a target throttle opening degree uniquely determined based on the accelerator operation amount as the output target throttle opening degree instead of the calculated target throttle opening degree under the predetermined condition.

3. The vehicle control device (10) according to claim 1, further comprising a target engine revolution speed correction unit (11B) being configured to correct the target engine revolution speed,
wherein the target throttle opening degree calculation unit (18) is configured to output a target throttle opening degree uniquely determined based on the accelerator operation amount as the output target throttle opening degree instead of the calculated target throttle opening degree when an absolute value of a difference between the corrected target engine revolution speed and the uncorrected target engine revolution speed is equal to or smaller than a threshold value.

4. The vehicle control device (10) according to claim 1, further comprising a target engine torque correction unit (15J) being configured to correct the target engine torque, wherein the target throttle opening degree calculation unit (18) is configured to output a target throttle opening degree uniquely determined based on the accelerator operation amount as the output target throttle opening degree instead of the calculated target throttle opening degree when an absolute value of a difference between the corrected target engine torque and the uncorrected target engine torque is equal to or smaller than a threshold value.

5. The vehicle control device (10) according to claim 1, further comprising:
a target engine revolution speed correction unit (31) being configured to correct the target engine revolution speed; and
a target engine torque correction unit (32) being configured to correct the target engine torque,
wherein the target throttle opening degree calculation unit (18) is configured to output a target throttle opening degree uniquely determined based on the accelerator operation amount as the output target throttle opening degree instead of the calculated target throttle opening degree when an absolute value of a difference between the corrected target engine revolution speed and the uncorrected target engine revolution speed is equal to or smaller than a threshold value, and when an absolute value of a difference between the corrected target engine torque and the uncorrected target engine torque is equal to or smaller than a threshold value.

6. The vehicle control device (10) according to claim 1, further comprising a fuel cut torque calculation unit (33) being configured to calculate torque generated when fuel supply to an engine is interrupted at the target engine revolution speed,
wherein the target throttle opening degree calculation unit (18) is configured to set the output target throttle opening degree to 0 when an absolute value of a difference between the target engine torque and the torque generated when fuel supply to an engine is interrupted at the target engine revolution speed is equal to or smaller than a threshold value.

7. The vehicle control device (10) according to claim 1, further comprising:
an optimum efficiency throttle opening degree calculation unit (35) being configured to calculate a throttle opening degree for achieving a best fuel efficiency at the target engine revolution speed; and
an optimum efficiency engine torque calculation unit (36) being configured to calculate an engine torque for achieving the best fuel efficiency based on the throttle opening degree for achieving a best fuel efficiency at the target engine revolution speed,
wherein the target throttle opening degree calculation unit (18) is configured to set the output target throttle opening degree to throttle opening degree for achieving a best fuel efficiency at the target engine revolution speed when an absolute value of a difference between the target engine torque and the engine torque for achieving the best fuel efficiency is equal to or smaller than a threshold value.

8. A vehicle control method for controlling a gear ratio of a continuously variable transmission (5) and a throttle opening degree, the vehicle control method comprising:
a target engine revolution speed calculation step of calculating a target engine revolution speed;
a target gear ratio calculation step of calculating a target gear ratio based on the target engine revolution speed;
a target engine torque calculation step of calculating a target engine torque based on an accelerator operation amount and the target engine revolution speed; and
a target throttle opening degree calculation step of calculating a target throttle opening degree based on the target engine revolution speed and the target engine torque,
the target throttle opening degree calculation step comprising outputting a target throttle opening degree instead of the calculated target throttle opening degree under a predetermined condition, wherein the output target throttle opening degree is different from the calculated target throttle opening degree.

9. The vehicle control method according to claim 8, further comprising:
outputting a target throttle opening degree uniquely determined based on the accelerator operation amount as the output target throttle opening degree instead of the calculated target throttle opening degree under the predetermined condition.

10. The vehicle control method according to claim 8, further comprising:
correcting the target engine revolution speed,
outputting a target throttle opening degree uniquely determined based on the accelerator operation amount as the output target throttle opening degree instead of the calculated target throttle opening degree when an absolute value of a difference between the corrected target engine revolution speed and the uncorrected target engine revolution speed is equal to or smaller than a threshold value.

11. The vehicle control method according to claim 8, further comprising:
correcting the target engine torque,
outputting a target throttle opening degree uniquely determined based on the accelerator operation amount as the output target throttle opening degree instead of the calculated target throttle opening degree when an absolute value of a difference between the corrected target engine torque and the uncorrected target engine torque is equal to or smaller than a threshold value.

12. The vehicle control method according to claim 8, further comprising:
correcting the target engine revolution speed,
correcting the target engine torque,
outputting a target throttle opening degree uniquely determined based on the accelerator operation amount as the output target throttle opening degree instead of the calculated target throttle opening degree when an absolute value of a difference between the corrected target engine revolution speed and the uncorrected target engine revolution speed is equal to or smaller than a threshold value, and when an absolute value of a difference between the corrected target engine torque and the uncorrected target engine torque is equal to or smaller than a threshold value.

13. The vehicle control method according to claim 8, further comprising:
calculating torque generated when fuel supply to an engine is interrupted at the target engine revolution speed,
setting the output target throttle opening degree to 0 when an absolute value of a difference between the target engine torque and the torque generated when fuel supply to an engine is interrupted at the target engine revolution speed is equal to or smaller than a threshold value.

14. The vehicle control method according to claim 8, further comprising:
calculating a throttle opening degree for achieving a best fuel efficiency at the target engine revolution speed,
calculating an engine torque for achieving the best fuel efficiency based on the throttle opening degree for achieving a best fuel efficiency at the target engine revolution speed, setting the output target throttle opening degree to the throttle opening degree for achieving a best fuel efficiency at the target engine revolution speed when an absolute value of a difference between the target engine torque and the engine torque for achieving the best fuel efficiency based on the throttle opening degree for achieving a best fuel efficiency is equal to or smaller than a threshold value.

15. A saddle-ride type vehicle (1), comprising the vehicle control device (10) according to any one of claims 1 to 7.

## Patentansprüche

1. Eine Fahrzeug-Steuervorrichtung (10) zur Steuerung eines Übersetzungs-Verhältnisses von einem kontinuierlich variablen Getriebe (5) und einem Drossel-Öffnungsgrad, die Fahrzeug-Steuervorrichtung (10) umfasst:
eine Ziel-Motor-Drehgeschwindigkeits-Berechnungs-Einheit (11), die konfiguriert ist, um eine Ziel-Motor-Drehgeschwindigkeit zu berechnen;
eine Ziel-Übersetzungs-Verhältnis-Berechnungs-Einheit (13), die konfiguriert ist, um ein Ziel-Übersetzungs-Verhältnis auf Grundlage der Ziel-Motor-Drehgeschwindigkeit zu berechnen;
eine Ziel-Motor-Moment-Berechnungs-Einheit (15), die konfiguriert ist, um ein Ziel-Motor-Moment auf Grundlage eines Beschleuniger-Betätigungs-Betrags und der Ziel-Motor-Drehgeschwindigkeit zu berechnen; und
eine Ziel-Drossel-Öffnungsgrad-Berechnungs-Einheit (18), die konfiguriert ist, um einen Ziel-Drossel-Öffnungsgrad auf Grundlage der Ziel-Motor-Drehgeschwindigkeit und dem Ziel-Motor-Moment zu berechnen,
die Ziel-Drossel-Öffnungsgrad-Berechnungs-Einheit (18) ist konfiguriert, um einen Ziel-Drossel-Öffnungsgrad anstelle des berechneten Ziel-Drossel-Öffnungsgrades unter einer vorgegebenen Bedingung auszugeben, wobei dieser Ausgabe-Ziel-Drossel-Öffnungsgrad unterschiedlich von dem berechneten Ziel-Drossel-Öffnungsgrad ist.

2. Die Fahrzeug-Steuervorrichtung (10) gemäß Anspruch 1, wobei die Ziel-Drossel-Öffnungsgrad-Berechnungs-Einheit (18) konfiguriert ist, um einen Ziel-Drossel-Öffnungsgrad, der einmalig auf Grundlage des Beschleuniger-Betätigungs-Betrags bestimmt ist, als den Ausgabe-Ziel-Drossel-Öffnungsgrad anstelle des berechneten Ziel-Drossel-Öffnungsgrads unter der vorgegebenen Bedingung, auszugeben.

3. Die Fahrzeug-Steuervorrichtung (10) gemäß Anspruch 1, die weiter umfasst eine Ziel-Motor-Drehgeschwindigkeits-Korrektureinheit (11B), die konfiguriert ist, um die Ziel-Motor-Drehgeschwindigkeit zu korrigieren,
wobei die Ziel-Drossel-Öffnungsgrad-Berechnungs-Einheit (18) konfiguriert ist, um einen Ziel-Drossel-Öffnungsgrad auszugeben, der einmalig auf Grundlage des Beschleuniger-Betätigungs-Betrags, als den Ausgabe-Ziel-Drossel-Öffnungsgrad, anstelle des berechneten Ziel-Drossel-Öffnungsgrades, bestimmt ist, wenn ein absoluter Wert einer Differenz zwischen der korrigierten Ziel-Motor-Drehgeschwindigkeit und der un-korrigierten Ziel-Motor-Drehgeschwindigkeit gleich oder kleiner als ein Grenzwert ist.

4. Die Fahrzeug-Steuervorrichtung (10) gemäß Anspruch 1, die weiter umfasst eine Ziel-Motor-Moment-Korrektureinheit (15J), die konfiguriert ist, um das Ziel-Motor-Moment zu korrigieren,
wobei die Ziel-Drossel-Öffnungsgrad-Berechnungs-Einheit (18) konfiguriert ist, um einen Ziel-Drossel-Öffnungsgrad auszugeben, der einmalig auf Grundlage des Beschleuniger-Betätigungs-Betrags, als den Ausgabe-Ziel-Drossel-Öffnungsgrad, anstelle des berechneten Ziel-Drossel-Öffnungsgrads, bestimmt ist, wenn ein absoluter Wert einer Differenz zwischen dem korrigierten Ziel-Motor-Moment und dem un-korrigierten Ziel-Motor-Moment gleich oder kleiner als ein Grenzwert ist.

5. Die Fahrzeug-Steuervorrichtung (10) gemäß Anspruch 1, die weiter umfasst:
eine Ziel-Motor-Drehgeschwindigkeits-Korrektureinheit (31), die konfiguriert ist, um die Ziel-Motor-Drehgeschwindigkeit zu korrigieren; und
eine Ziel-Motor-Moment-Korrektureinheit (32), die konfiguriert ist, um das Ziel-Motor-Moment zu korrigieren,
wobei die Ziel-Drossel-Öffnungsgrad-Berechnungs-Einheit (18) konfiguriert ist, um einen Ziel-Drossel-Öffnungsgrad auszugeben, der einmalig auf Grundlage des Beschleuniger-Betätigungs-Betrags, als den Ausgabe-Ziel-Drossel-Öffnungsgrad, anstelle des berechneten Ziel-Drossel-Öffnungsgrad bstimmt ist, wenn ein absoluter Wert einer Differenz zwischen der korrigierten Ziel-Motor-Drehgeschwindigkeit und der un-korrigierten Ziel-Motor-Drehgeschwindigkeit gleich oder kleiner als ein Grenzwert ist, und wenn ein absoluter Wert einer Differenz zwischen dem korrigierten Ziel-Motor-Moment und dem un-korrigierten Ziel-Motor-Moment gleich oder kleiner als ein Grenzwert ist.

6. Die Fahrzeug-Steuervorrichtung (10) gemäß Anspruch 1, die weiter umfasst eine Kraftstoff-Abschneid-Moment-Berechnungs-Einheit (33), die konfiguriert ist, um Moment, das erzeugt wird, wenn Kraftstoffzufuhr zu einem Motor bei der Ziel-Motor-Drehgeschwindigkeit unterbrochen ist, zu berechnen,
wobei die Ziel-Drossel-Öffnungsgrad-Berechnungs-Einheit (18) konfiguriert ist, um den Ausgabe-Ziel-Drossel-Öffnungsgrad auf 0 zu setzen, wenn ein absoluter Wert eine Differenz zwischen dem Ziel-Motor-Moment und dem Moment, erzeugt, wenn Kraftstoffzufuhr zu einem Motor bei der Ziel-Motor-Drehgeschwindigkeit unterbrochen ist, gleich oder kleiner als ein Grenzwert ist.

7. Die Fahrzeug-Steuervorrichtung (10) gemäß Anspruch 1, die weiter umfasst:
eine Optimum-Effizienz-Drossel-Öffnungsgrad-Berechnungs-Einheit (35), die konfiguriert ist, um einen Drossel-Öffnungsgrad zum Erreichen einer besten Kraftstoff-Effizienz bei der Ziel-Motor-Drehgeschwindigkeit zu berechnen; und
eine Optimum-Effizienz-Motor-Moment-Berechnungs-Einheit (36), die konfiguriert ist, um ein Motor-Moment zum Erreichen der besten Kraftstoff-Effizienz auf Grundlage des Drossel-Öffnungsgrads, zum Erreichen der besten Kraftstoff-Effizienz bei der Ziel-Motor-Drehgeschwindigkeit, zu berechnen,
wobei die Ziel-Drossel-Öffnungsgrad-Berechnungs-Einheit (18) konfiguriert ist, um den Ausgabe-Ziel-Drossel-Öffnungsgrad auf den Drossel-Öffnungsgrad zum Erreichen einer besten Kraftstoff-Effizienz bei der Ziel-Motor-Drehgeschwindigkeit zu setzen, wenn ein absoluter Wert einer Differenz zwischen dem Ziel-Motor-Moment und dem Motor-Moment zum Erreichen der besten Kraftstoff-Effizienz gleich oder kleiner als ein Grenzwert ist.

8. Ein Fahrzeug-Steuerverfahren zur Steuerung eines Übersetzungs-Verhältnisses von einem kontinuierlich variablen Getriebe (5) und einem Drossel-Öffnungsgrad, das Fahrzeug-Steuerverfahren umfasst:
einen Ziel-Motor-Drehgeschwindigkeits-Berechnungs-Schritt einer Berechnung einer Ziel-Motor-Drehgeschwindigkeit;
einen Ziel-Übersetzungs-Verhältnis-Berechnungs-Schritt einer Berechnung eines Ziel-Übersetzungs-Verhältnis auf Grundlage der Ziel-Motor-Drehgeschwindigkeit;
eine Ziel-Motor-Moment-Berechnungs-Schritt einer Berechnung eines Ziel-Motor-Moment auf Grundlage eines Beschleuniger-Betätigungs-Betrags und der Ziel-Motor-Drehgeschwindigkeit; und
einen Ziel-Drossel-Öffnungsgrad-Berechnungs-Schritt einer Berechnung eines Ziel-Drossel-Öffnungsgrad auf Grundlage der Ziel-Motor-Drehgeschwindigkeit und dem Ziel-Motor-Moment,
der Ziel-Drossel-Öffnungsgrad-Berechnungs- Schritt umfasst Ausgeben eines Ziel-Drossel-Öffnungsgrad anstelle des berechneten Ziel-Drossel-Öffnungsgrades unter einer vorgegebenen Bedingung, wobei dieser Ausgabe-Ziel-Drossel-Öffnungsgrad unterschiedlich von dem berechneten Ziel-Drossel-Öffnungsgrad ist.

9. Die Fahrzeug-Steuerverfahren gemäß Anspruch 8, das weiter umfasst:
Ausgeben eines Ziel-Drossel-Öffnungsgrad, der einmalig auf Grundlage des Beschleuniger-Betätigungs-Betrags bestimmt ist, als den Ausgabe-Ziel-Drossel-Öffnungsgrad anstelle des berechneten Ziel-Drossel-Öffnungsgrads unter der vorgegebenen Bedingung.

10. Die Fahrzeug-Steuerverfahren gemäß Anspruch 8, das weiter umfasst:
Korrigieren der Ziel-Motor-Drehgeschwindigkeit,
Ausgeben eines Ziel-Drossel-Öffnungsgrad, der einmalig auf Grundlage des Beschleuniger-Betätigungs-Betrags, als den Ausgabe-Ziel-Drossel-Öffnungsgrad,
anstelle des berechneten Ziel-Drossel-Öffnungsgrades bestimmt ist, wenn ein absoluter Wert einer Differenz zwischen der korrigierten Ziel-Motor-Drehgeschwindigkeit und der un-korrigierten Ziel-Motor-Drehgeschwindigkeit gleich oder kleiner als ein Grenzwert ist.

11. Die Fahrzeug-Steuerverfahren gemäß Anspruch 8, das weiter umfasst:
Korrigieren des Ziel-Motor-Moments,
Ausgeben eines Ziel-Drossel-Öffnungsgrad, der einmalig auf Grundlage des Beschleuniger-Betätigungs-Betrags, als den Ausgabe-Ziel-Drossel-Öffnungsgrad, anstelle des berechneten Ziel-Drossel-Öffnungsgrads, bestimmt ist, wenn ein absoluter Wert einer Differenz zwischen dem korrigierten Ziel-Motor-Moment und dem un-korrigierten Ziel-Motor-Moment gleich oder kleiner als ein Grenzwert ist.

12. Die Fahrzeug-Steuerverfahren gemäß Anspruch 8, das weiter umfasst:
Korrigieren der Ziel-Motor-Drehgeschwindigkeit,
Korrigieren des Ziel-Motor-Moments,
Ausgeben eines Ziel-Drossel-Öffnungsgrad, der einmalig auf Grundlage des Beschleuniger-Betätigungs-Betrags, als den Ausgabe-Ziel-Drossel-Öffnungsgrad,
anstelle des berechneten Ziel-Drossel-Öffnungsgrad bstimmt ist, wenn ein absoluter Wert einer Differenz zwischen der korrigierten Ziel-Motor-Drehgeschwindigkeit und der un-korrigierten Ziel-Motor-Drehgeschwindigkeit gleich oder kleiner als ein Grenzwert ist, und wenn ein absoluter Wert einer Differenz zwischen dem korrigierten Ziel-Motor-Moment und dem un-korrigierten Ziel-Motor-Moment gleich oder kleiner als ein Grenzwert ist.

13. Die Fahrzeug-Steuerverfahren gemäß Anspruch 8, das weiter umfasst:
Berechnen eines Moment, das erzeugt wird, wenn Kraftstoffzufuhr zu einem Motor bei der Ziel-Motor-Drehgeschwindigkeit unterbrochen ist,
Setzen des Ausgabe-Ziel-Drossel-Öffnungsgrads auf 0, wenn ein absoluter Wert eine Differenz zwischen dem Ziel-Motor-Moment und dem Moment, erzeugt, wenn Kraftstoffzufuhr zu einem Motor bei der Ziel-Motor-Drehgeschwindigkeit unterbrochen ist, gleich oder kleiner als ein Grenzwert ist.

14. Die Fahrzeug-Steuerverfahren gemäß Anspruch 8, das weiter umfasst:
Berechnen eines Drossel-Öffnungsgrads zum Erreichen einer besten Kraftstoff-Effizienz bei der Ziel-Motor-Drehgeschwindigkeit; und
Berechnen eines Motor-Moment zum Erreichen der besten Kraftstoff-Effizienz auf Grundlage des Drossel-Öffnungsgrads, zum Erreichen der besten Kraftstoff-Effizienz bei der Ziel-Motor-Drehgeschwindigkeit,
Setzen des Ausgabe-Ziel-Drossel-Öffnungsgrads auf den Drossel-Öffnungsgrad zum Erreichen einer besten Kraftstoff-Effizienz bei der Ziel-Motor-Drehgeschwindigkeit,
wenn ein absoluter Wert einer Differenz zwischen dem Ziel-Motor-Moment und dem Motor-Moment zum Erreichen der besten Kraftstoff-Effizienz gleich oder kleiner als ein Grenzwert ist.

15. Ein Sattel-Reit-Typ-Fahrzeug (1), das die Fahrzeug-Steuervorrichtung (10) gemäß irgend einem der Ansprüche 1 bis 7 umfasst.

## Revendications

1. Dispositif de commande de véhicule (10) pour commander un rapport de vitesse d'une transmission à variation continue (5) et un degré d'ouverture de papillon des gaz, le dispositif de commande de véhicule (10) comprenant :
une unité de calcul de vitesse de rotation moteur cible (11) qui est configurée pour calculer une vitesse de rotation moteur cible ;
une unité de calcul de rapport de vitesse cible (13) qui est configurée pour calculer un rapport de vitesse cible sur la base de la vitesse de rotation moteur cible ;
une unité de calcul de couple moteur cible (15) qui est configurée pour calculer un couple moteur cible sur la base d'une quantité d'actionnement d'accélérateur et de la vitesse de rotation moteur cible ; et
une unité de calcul de degré d'ouverture de papillon des gaz cible (18) qui est configurée pour calculer un degré d'ouverture de papillon des gaz cible sur la base de la vitesse de rotation moteur cible et du couple moteur cible,
l'unité de calcul de degré d'ouverture de papillon des gaz cible (18) étant configurée pour délivrer en sortie un degré d'ouverture de papillon des gaz cible au lieu du degré d'ouverture de papillon des gaz cible calculé dans une condition prédéterminée, dans laquelle ledit degré d'ouverture de papillon des gaz cible délivré en sortie est différent du degré d'ouverture de papillon des gaz cible calculé.

2. Dispositif de commande de véhicule (10) selon la revendication 1, dans lequel l'unité de calcul de degré d'ouverture de papillon des gaz cible (18) est configurée pour délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé dans la condition prédéterminée.

3. Dispositif de commande de véhicule (10) selon la revendication 1, comprenant en outre une unité de correction de vitesse de rotation moteur cible (11B) qui est configurée pour corriger la vitesse de rotation moteur cible,
dans lequel l'unité de calcul de degré d'ouverture de papillon des gaz cible (18) est configurée pour délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé lorsqu'une valeur absolue d'une différence entre la vitesse de rotation moteur cible corrigée et la vitesse de rotation moteur cible non corrigée est égale ou inférieure à une valeur seuil.

4. Dispositif de commande de véhicule (10) selon la revendication 1, comprenant en outre une unité de correction de couple moteur cible (15J) qui est configurée pour corriger le couple moteur cible, l'unité de calcul de degré d'ouverture de papillon des gaz cible (18) étant configurée pour délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé lorsqu'une valeur absolue d'une différence entre le couple moteur cible corrigé et le couple moteur cible non corrigé est égale ou inférieure à une valeur seuil.

5. Dispositif de commande de véhicule (10) selon la revendication 1, comprenant en outre :
une unité de correction de vitesse de rotation moteur cible (31) qui est configurée pour corriger la vitesse de rotation moteur cible ; et
une unité de correction de couple moteur cible (32) qui est configurée pour corriger le couple moteur cible,
dans lequel l'unité de calcul de degré d'ouverture de papillon des gaz cible (18) est configurée pour délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé lorsqu'une valeur absolue d'une différence entre la vitesse de rotation moteur cible corrigée et la vitesse de rotation moteur cible non corrigée est égale ou inférieure à une valeur seuil, et lorsqu'une valeur absolue d'une différence entre le couple moteur cible corrigé et le couple moteur cible non corrigé est inférieure ou égale à une valeur seuil.

6. Dispositif de commande de véhicule (10) selon la revendication 1, comprenant en outre une unité de calcul de couple de coupure de carburant (33) qui est configurée pour calculer un couple généré lorsque l'alimentation en carburant d'un moteur est interrompue à la vitesse de rotation moteur cible,
dans lequel l'unité de calcul de degré d'ouverture de papillon des gaz cible (18) est configurée pour établir le degré d'ouverture de papillon des gaz cible délivré en sortie à 0 lorsqu'une valeur absolue d'une différence entre le couple moteur cible et le couple généré lorsque l'alimentation en carburant d'un moteur est interrompue à la vitesse de rotation moteur cible est égale ou inférieure à une valeur seuil.

7. Dispositif de commande de véhicule (10) selon la revendication 1, comprenant en outre :
une unité de calcul de degré d'ouverture de papillon des gaz à efficacité optimale (35) qui est configurée pour calculer un degré d'ouverture de papillon des gaz pour obtenir un rendement énergétique le meilleur à la vitesse de rotation moteur cible ; et
une unité de calcul de couple moteur à efficacité optimale (36) qui est configurée pour calculer un couple moteur pour obtenir le meilleur rendement énergétique sur la base du degré d'ouverture de papillon des gaz pour obtenir un rendement énergétique le meilleur à la vitesse de rotation moteur cible,
dans lequel l'unité de calcul de degré d'ouverture de papillon des gaz cible (18) est configurée pour établir le degré d'ouverture de papillon des gaz cible délivré en sortie au degré d'ouverture de papillon des gaz pour obtenir un rendement énergétique le meilleur à la vitesse de rotation moteur cible lorsqu'une valeur absolue d'une différence entre le couple moteur cible et le couple moteur pour obtenir le meilleur rendement énergétique est égale ou inférieure à une valeur seuil.

8. Procédé de commande de véhicule pour commander un rapport de vitesse d'une transmission à variation continue (5) et un degré d'ouverture de papillon des gaz, le procédé de commande de véhicule comprenant :
une étape de calcul de vitesse de rotation moteur cible consistant à calculer une vitesse de rotation moteur cible ;
une étape de calcul de rapport de vitesse cible consistant à calculer un rapport de vitesse cible sur la base de la vitesse de rotation moteur cible ;
une étape de calcul de couple moteur cible consistant à calculer un couple moteur cible sur la base d'une quantité d'actionnement d'accélérateur et de la vitesse de rotation moteur cible ; et
une étape de calcul de degré d'ouverture de papillon des gaz cible consistant à calculer un degré d'ouverture de papillon des gaz cible sur la base de la vitesse de rotation moteur cible et du couple moteur cible,
l'étape de calcul de degré d'ouverture de papillon des gaz cible comprenant de délivrer en sortie un degré d'ouverture de papillon des gaz cible au lieu du degré d'ouverture de papillon des gaz cible calculé dans une condition prédéterminée, dans laquelle le degré d'ouverture de papillon des gaz cible délivré en sortie est différent du degré d'ouverture de papillon des gaz cible calculé.

9. Procédé de commande de véhicule selon la revendication 8, comprenant en outre de :
délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé dans la condition prédéterminée.

10. Procédé de commande de véhicule selon la revendication 8, comprenant en outre de :
corriger la vitesse de rotation moteur cible,
délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé lorsqu'une valeur absolue d'une différence entre la vitesse de rotation moteur cible corrigée et la vitesse de rotation moteur cible non corrigée est égale ou inférieure à une valeur seuil.

11. Procédé de commande de véhicule selon la revendication 8, comprenant en outre de :
corriger le couple moteur cible,
délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé lorsqu'une valeur absolue d'une différence entre le couple moteur cible corrigé et le couple moteur cible non corrigé est égale à ou inférieure à une valeur seuil.

12. Procédé de commande de véhicule selon la revendication 8, comprenant en outre de :
corriger la vitesse de rotation moteur cible,
corriger le couple moteur cible,
délivrer en sortie un degré d'ouverture de papillon des gaz cible déterminé de manière unique sur la base de la quantité d'actionnement d'accélérateur en tant que degré d'ouverture de papillon des gaz cible délivré en sortie au lieu du degré d'ouverture de papillon des gaz cible calculé lorsqu'une valeur absolue d'une différence entre la vitesse de rotation moteur cible corrigée et la vitesse de rotation moteur cible non corrigée est égale ou inférieure à une valeur seuil, et lorsqu'une valeur absolue d'une différence entre le couple moteur cible corrigé et le couple moteur cible non corrigé est égale ou inférieure à une valeur seuil.

13. Procédé de commande de véhicule selon la revendication 8, comprenant en outre de :
calculer un couple généré lorsque l'alimentation en carburant d'un moteur est interrompue à la vitesse de rotation moteur cible,
établir le degré d'ouverture de papillon des gaz cible délivré en sortie à 0 lorsqu'une valeur absolue d'une différence entre le couple moteur cible et le couple généré lorsque l'alimentation en carburant d'un moteur est interrompue à la vitesse de rotation moteur cible est égale ou inférieure à une valeur seuil.

14. Procédé de commande de véhicule selon la revendication 8, comprenant en outre de :
calculer un degré d'ouverture de papillon des gaz pour obtenir un rendement énergétique le meilleur à la vitesse de rotation moteur cible,
calculer un couple moteur pour obtenir le meilleur rendement énergétique sur la base du degré d'ouverture de papillon des gaz pour obtenir un rendement énergétique le meilleur à la vitesse de rotation moteur cible,
établir le degré d'ouverture de papillon des gaz cible délivré en sortie au degré d'ouverture de papillon des gaz pour obtenir un rendement énergétique le meilleur à la vitesse de rotation moteur cible lorsqu'une valeur absolue d'une différence entre le couple moteur cible et le couple moteur pour obtenir le meilleur rendement énergétique sur la base du degré d'ouverture de papillon des gaz pour obtenir un rendement énergétique le meilleur est inférieure ou égale à une valeur seuil.

15. Véhicule de type à selle (1) comprenant le dispositif de commande de véhicule (10) selon l'une quelconque des revendications 1 à 7.
